# EUROPEAN PATENT SPECIFICATION

(11) **EP 3 758 191 B1**
(45) Date of publication and mention of the grant of the patent: **14.10.2026**
(21) Application number: 20171824.4
(22) Date of filing: 28.04.2020
(51) Int. Cl.: H02J 7/02, H02J 50/80, H02J 50/10, H02J 50/90

(54) **METHOD AND APPARATUS FOR ADJUSTING TRANSMITTER COIL POSITION IN A WIRELESS POWER TRANSMISSION**
VERFAHREN UND VORRICHTUNG ZUR EINSTELLUNG DER SENDERSPULENPOSITION BEI DRAHTLOSER LEISTUNGSÜBERTRAGUNG
PROCÉDÉ ET APPAREIL DE RÉGLAGE DE POSITION DE BOBINE D`UN EMETTEUR DANS UNE TRANSMISSION D`ENERGIE SANS FIL

(30) Priority: 28.06.2019 CN 201910577689
(43) Date of publication of application: 30.12.2020
(73) Proprietor: Beijing Xiaomi Mobile Software Co., Ltd., Beijing 100085 (CN)
(72) Inventor: SUN, Changyu, Beijing 100085 (CN)
(74) Representative: Dehns Germany Partnerschaft mbB

(56) References cited:
- CN-A- 108 123 556
- CN-A- 108 923 547
- CN-A- 108 988 499
- JP-A- 2010 183 706
- US-A1- 2009 079 269
- US-A1- 2014 117 926
- US-A1- 2017 338 682
- US-A1- 2018 054 086

## Description

### BACKGROUND

Wireless charging technology is a charging technology that uses the principle of electromagnetic induction, that is, electrical energy is transmitted by using an alternating magnetic field generated between coils.

In the related art, the wireless charging technology is exemplarily applied to a mobile phone. The mobile phone is placed on a wireless charging device, the wireless charging device is provided with a transmitting coil, and the mobile phone is provided with a receiving coil. When the mobile phone is placed on the wireless charging device, the transmitting coil is powered on and generates a constantly varying magnetic field, and the receiving coil may sense variations of the magnetic field and generates a current which charges the battery of the mobile phone and implements wireless charging.

However, in the above related art, if the mobile phone is placed at an improper position on the wireless charging device, a charging efficiency may not be ensured. Documents dealing with this technical problem are:
US 2009/079269 A1 (JIN MIKIMOTO [JP]) 26 March 2009 (2009-03-26)
US 2014/117926 A1 (HWU JUI-TE [TW] ET AL) 1 May 2014 (2014-05-01)
CN 108 988 499 A (OUGESHI XIAMEN TECH CO LTD) 11 December 2018 (2018-12-11)
CN 108 923 547 A (SHENZHEN WATER WORLD CO LTD) 30 November 2018 (2018-11-30)
JP 2010 183706 A (SANYO ELECTRIC CO) 19 August 2010 (2010-08-19)
CN 108 123 556 A (SHENZHEN HELLO TECH ENERGY CO LTD) 5 June 2018 (2018-06-05)
US 2017/338682 A1 (YUAN KEMING [CN] ET AL) 23 November 2017 (2017-11-23)
US 2018/054086 A1 (JUNG CHUN KIL [KR]) 22 February 2018 (2018-02-22)

### SUMMARY

Embodiments of the present invention relate to the technical field of wireless charging, and in particular, relate to a method and apparatus for adjusting a coil position.

According to a first aspect of the present invention, a method for adjusting a coil according to claim 1 is provided.

According to a second aspect of the present invention, an alternative method for adjusting a coil according to claim 5 is provided.

According to a third aspect of the present invention, an apparatus for adjusting a coil position according to claim 9 is provided.

According to a fourth aspect of the present invention, a system for adjusting the coil position according to claim 13 is provided.

The technical solutions according to the embodiments of the present invention may achieve the following beneficial effects:
The coil position is adjusted by the power transmitting device adjusts according to the position offset between the transmitting coil and the receiving coil. If the power receiving device is not properly placed on the power transmitting device, the position of the transmitting coil is automatically adjusted, such that a geometric center of the transmitting coil coincides with or approaches that of the receiving coil as far as possible. In this way, the charging efficiency of the power receiving device is improved.

It is to be understood that both the foregoing general description and the following detailed description are exemplary and explanatory only and are not used to limit the present disclosure.

### BRIEF DESCRIPTION OF THE DRAWINGS

The accompanying drawings herein, which are incorporated into and constitute a part of the disclosure, illustrate embodiments consistent with the present disclosure, and together with the specification, serve to explain the principles of the present disclosure.
FIG 1 is a schematic diagram of a service scenario of wireless charging according to some embodiments of the present disclosure;
FIG 2 is a flowchart of a method for adjusting a coil position according to some embodiments of the present disclosure;
FIG 3 exemplarily illustrates a schematic diagram of position adjustment of a transmitting coil;
FIG 4 exemplarily illustrates a schematic diagram of a closed-loop control system;
FIG 5 is a flowchart of a method for adjusting a coil position according to another exemplary embodiment of the present disclosure;
FIG 6 exemplarily illustrates a schematic diagram of a magnetic field component;
FIG 7 exemplarily illustrates a schematic diagram of a position adjustment parameter;
FIG 8 is a block diagram of an apparatus for adjusting a coil position according to some embodiments of the present disclosure;
FIG 9 is a block diagram of an apparatus for adjusting a coil position according to another exemplary embodiment of the present disclosure;
FIG 10 is a block diagram of an apparatus for adjusting a coil position according to another exemplary embodiment of the present disclosure;
FIG 11 is a block diagram of an apparatus for adjusting a coil position according to another exemplary embodiment of the present disclosure;
FIG 12 is a schematic structural diagram of a power transmitting device according to some embodiments of the present disclosure; and
FIG 13 is a schematic structural diagram of a power receiving device according to some embodiments of the present disclosure.

### DETAILED DESCRIPTION

Exemplary embodiments will be described in detail herein, examples of which are illustrated in the accompanying drawings. The following description refers to the accompanying drawings in which the same numbers in different drawings represent the same or similar elements unless otherwise indicated. The implementations set forth in the following exemplary embodiments do not represent all implementations consistent with the present invention. Rather, they are merely examples of devices and methods consistent with certain aspects of the present invention as detailed in the appended claims.

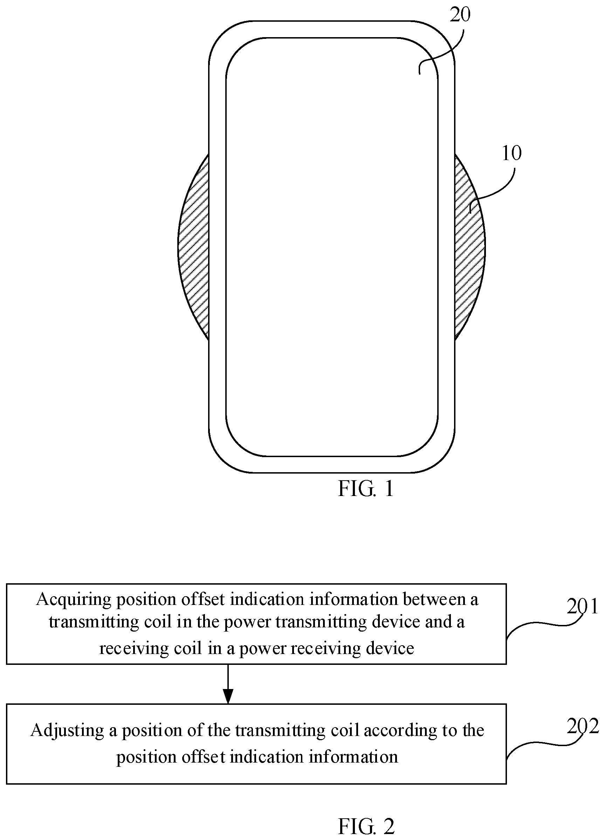

FIG 1 is a schematic diagram of a service scenario of wireless charging according to some embodiments of the present disclosure. The service scenario may include a power transmitting device 10 and a power receiving device 20.

The power transmitting device 10 refers to a device configured to supply power to a power consuming device in a wireless charging system. In different service scenarios, the power transmitting device 10 may be named differently. For example, if the power transmitting device 10 is configured to wirelessly charge a portable electronic device such as a mobile phone, a tablet computer, a wearable device or the like, the power transmitting device 10 may be referred to as a charger, a charger pad, a power adapter, a wireless charger or the like.

The power receiving device 20 refers to a device configured to receive power in wireless charging, that is, a power consuming device. The power receiving device 20 may be any power consuming device supporting wireless charging, for example, a terminal device such as a mobile phone, a tablet computer, a wearable device or the like, which is not limited in the embodiments of the present disclosure.

The technical solutions according to the embodiments of the present disclosure are applicable to a scenario of wireless charging for a terminal device such as a mobile phone, a tablet computer, or a wearable device.

FIG 2 is a flowchart of a method for adjusting a coil position according to some embodiments of the present disclosure. The method can be applied to the power transmitting device 10 as described above. The method can include the following steps (steps 201 to 202).

Step 201: position offset indication information between a transmitting coil in the power transmitting device and a receiving coil in a power receiving device is acquired.

In the embodiment of the present disclosure, the power transmitting device is configured to wirelessly charge the power receiving device, and the position offset indication information is used to reflect a position offset between the transmitting coil and the receiving coil. For specific description about the position offset indication information, reference may be made to the embodiments hereinafter, which is not described herein any further.

Step 202: a position of the transmitting coil is adjusted according to the position offset indication information.

In the embodiment of the present disclosure, the power transmitting device is capable of adjusting the position of the transmitting coil, such that a geometric center of the transmitting coil coincides with or approaches that of the receiving coil as far as possible and thus improves the charging efficiency. According to the invention, a power device may be arranged in the power transmitting device, and the power device is configured to control the transmitting coil to move, for example, control the transmitting coil to move within a plane where the transmitting coil is located.

In a possible design, the power device may be designed as follows. Electromagnets are arranged along X and Y directions of the transmitting coil in the power transmitting device, magnets or iron sheets or other magnetic material are arranged on the position of transmitting coil corresponding to the electromagnets for receiving forces generated by the electromagnets. By applying currents of different sizes to the electromagnets, forces of different sizes are generated between the electromagnets and the magnets. By applying the currents to different electromagnets, the transmitting coil may sense forces of different directions. By applying the currents of different sizes to the different electromagnets, a resultant force sensed by the transmitting coil is a position offset amount desired by the transmitting coil, such that the transmitting coil is aligned with the receiving coil.

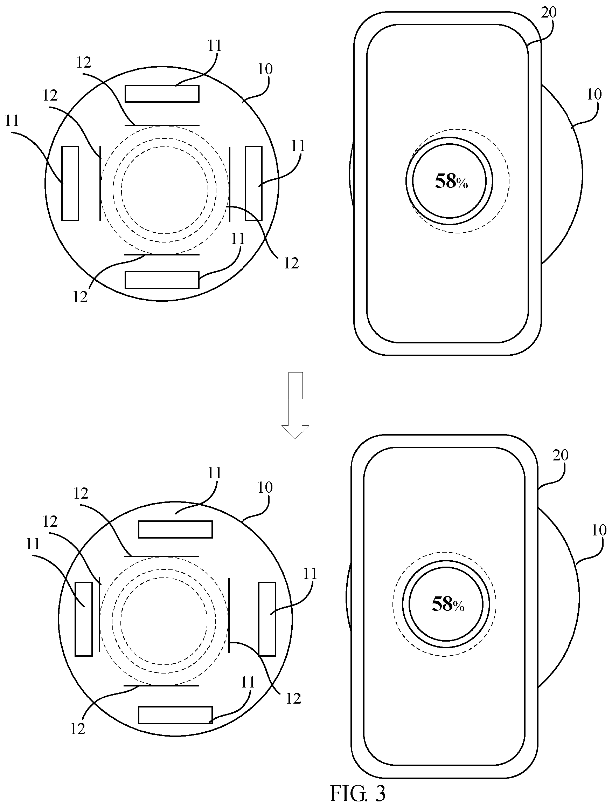

FIG 3 exemplarily illustrates a schematic diagram of position adjustment of a transmitting coil. Electromagnets 11 are arranged in the power transmitting device 10, and magnets 12 are arranged at positions corresponding to the electromagnets of the transmitting coil. As illustrated by the upper half in FIG 3, when the power receiving device 20 is placed, as illustrated in FIG 3, on the power transmitting device 10, the geometric center of the transmitting coil (the circle in broken line in FIG 3 represents the transmitting coil) is not aligned with the geometric center of the receiving coil (the circle in solid line in FIG 3 represents the receiving coil). The power transmitting device 10 determines that the transmitting coil is required to be adjusted by 2 mm to the left side according to the position offset indication information and then the power transmitting device 10 applies a corresponding current to the electromagnet 11 on the left side and applies no current to the electromagnets on the other three sides, such that an attraction force is generated between the electromagnet 11 on the left side and the transmitting coil, and the transmitting coil is moved to the left side by 2 mm. Of course, in other possible implementations, different currents may be applied to different electromagnets 11 as long as the final resultant force may cause the transmitting coil to move to the left until an effect as illustrated by the lower half in FIG 3 is achieved.

As such, in some embodiments of the present disclosure, the coil position is adjusted by the power transmitting device according to the position offset between the transmitting coil and the receiving coil. If the power receiving device is not properly placed on the power transmitting device, the position of the transmitting coil is automatically adjusted, such that a geometric center of the transmitting coil coincides with or approaches that of the receiving coil as far as possible and thus improves the charging efficiency of the power receiving device.

In exemplary embodiments, the position adjustment of the transmitting coil has the following two cases.

In a first case, the power transmitting device determines the position offset indication information by itself, and adaptively adjusts the position of the transmitting coil.

In one example, the position offset indication information includes charging efficiency indication information.

In the embodiments of the present disclosure, the charging efficiency indication information is used to indicate a charging efficiency of wireless charging.

The charging efficiency indication information may be determined in the following approaches.
1. A transmitted power of the power transmitting device and a received power of the power receiving device are acquired.

The transmitted power of the power transmitting device may be determined according to a transmitted current and a transmitted voltage of the power transmitting device, and the received power of the power receiving device may be determined according to a received current and a received voltage of the power receiving device. For example, the transmitted power = the transmitted current * the transmitted voltage; and the received power = the received current * the received voltage.

2. A charging efficiency is calculated according to the transmitted power and the received power.

Exemplarily, the charging efficiency = the received power/the transmitted power = the received current * the received voltage/the transmitted current * the transmitted voltage.

3. The charging efficiency indication information is determined according to the charging efficiency.

Exemplarily, the charging efficiency indication information may refer to efficiency loss, wherein the efficiency loss may be determined according to a currently expected charging efficiency and the above charging efficiency, for example, the efficiency loss = the charging efficiency - the currently expected charging efficiency.

The currently expected charging efficiency is used to indicate a charging efficiency when the receiving coil is aligned with the transmitting coil under a current electric quantity. Since the charging efficiencies are different when the receiving coil is aligned with the transmitting coil under different electric quantities, a mapping relationship exists between the electric quantity and the expected charging efficiency. Therefore, in a case that the power transmitting device knows the current electric quantity, the currently expected charging efficiency may be determined according to the mapping between the electric quantity and the expected charging efficiency.

The position of the transmitting coil may be adjusted in the following approaches.
1. Whether the charging efficiency indication information satisfies a first predetermined condition is detected.

Assuming that the charging efficiency indication information is efficiency loss, the first predetermined condition may be that the efficiency loss is less than a first threshold; and assuming that the charging efficiency indication information is a charging efficiency, the first predetermined condition may be that the charging efficiency is less than a second threshold.

2. The position of the transmitting coil is adjusted if the charging efficiency indication information satisfies the first predetermined condition.

Assuming that the charging efficiency indication information is the efficiency loss, the efficiency loss takes a value of -5, the first threshold is -4, and the efficiency loss is less than the first threshold, the charging efficiency indication information satisfies the first predetermined condition, and the power transmitting device is required to adjust the position of the transmitting coil.

3. After the adjustment of the position of the transmitting coil, the charging efficiency indication information is re-acquired, and the step of detecting whether the charging efficiency indication information satisfies the first predetermined condition is performed again until the charging efficiency indication information does not satisfy the first predetermined condition, and the position adjustment of the transmitting coil is stopped.

Description is given still by using the above example as an example. Assuming that the power transmitting device firstly moves the transmitting coil to the left, the power transmitting device re-acquires the efficiency loss and in this case the efficiency loss is -4.5 which is less than -4 but greater than -5, and then it indicates that the adjustment direction of the transmitting coil is correct, and the power transmitting device may continue moving the transmitting coil to the left as long as the finally acquired efficiency is caused to be greater than -4. If the efficiency loss re-acquired by the power transmitting device is -6, which is less than -5, after the power transmitting device moves the transmitting coil to the left, it indicates that the adjustment direction of the transmitting coil is incorrect, and the transmitting coil needs to be moved to the right. If the efficiency loss re-acquired by the power transmitting device is -4.5, which is greater than -6 and less than -4, after the power transmitting device moves the transmitting coil to the right, it indicates that the adjustment direction at this time is correct and the power transmitting device needs to continue moving the transmitting coil to the right until the re-acquired efficiency loss is greater than -4.

After adjusting the position of the transmitting coil, the power transmitting device may re-acquire the charging efficiency indication information every a predetermined time period, and the step of detecting whether the charging efficiency indication information satisfies the first predetermined condition is performed again or the step of detecting whether the charging temperature indication information satisfies the second predetermined condition is performed again.

In another example, the position offset indication information further includes charging temperature indication information.

In the embodiment of the present disclosure, the charging temperature indication information is used to indicate a temperature of the power transmitting device.

The charging temperature indication information may be temperature loss, and the temperature loss may be determined according to a current temperature and a currently expected temperature. For example, the temperature loss = the current temperature - the currently expected temperature.

A temperature sensor is arranged in the power transmitting device. The current temperature may be determined by the temperature sensor. The currently expected temperature is used to indicate a temperature when the receiving coil is aligned with the transmitting coil under a current electric quantity. Since the temperatures are different when the receiving coil is aligned with the transmitting coil under different electric quantities, a mapping relationship exists between the electric quantity and the desired temperature. Therefore, in a case that the power transmitting device knows the current electric quantity, the currently expected temperature may be determined according to the mapping relationship between the electric quantity and the expected temperature.

The position of the transmitting coil may be adjusted in the following approaches.
1. Whether the charging temperature indication information satisfies a second predetermined condition is detected.

Assuming that the temperature indication information is temperature loss, the second predetermined condition may be that the temperature loss is greater than a third threshold; and assuming that the temperature indication information is a current temperature, the second predetermined condition may be that the charging efficiency is greater than a fourth threshold.

2. The position of the transmitting coil is adjusted if the charging temperature indication information satisfies the second predetermined condition. After the adjustment of the position of the transmitting coil, the charging temperature indication information is re-acquired, the step of detecting whether the charging temperature indication information satisfies the second predetermined condition is performed again until the charging efficiency indication information does not satisfy the first predetermined condition and the charging temperature indication information does not satisfy the second predetermined condition, and the position adjustment of the transmitting coil is stopped.

Assuming that the charging temperature indication information is the temperature loss, the temperature loss takes a value of 10, the third threshold is 5, and the temperature loss is greater than the third threshold, it indicates that the charging temperature indication information satisfies the second predetermined condition, and the power transmitting device needs to adjust the position of the transmitting coil. In this case, the efficiency loss is -5. Assuming that the power transmitting device firstly moves the transmitting coil to the left, the power transmitting device re-acquires the efficiency loss, and in this case the efficiency loss is -4.5 which is less than -4 but greater than -5 and the temperature loss takes a value of 8.8 which is greater than 5 but less than 10, it indicates that the adjustment direction of the transmitting coil is correct, and the power transmitting device may continue moving the transmitting coil to the left as long as the finally acquired efficiency loss is greater than the first threshold and the finally acquired temperature loss is less than the third threshold. If the temperature loss re-acquired by the power transmitting device is 12 which is greater than 10 after the power transmitting device moves the transmitting coil to the left, it indicates that the adjustment direction of the transmitting coil is incorrect, and the transmitting coil needs to be moved to the right. If the temperature loss re-acquired by the power transmitting device is 9 which is greater than 5 but less than 10 after the power transmitting device moves the transmitting coil to the right, it indicates that the adjustment direction of the transmitting coil is correct, and the power transmitting device needs to continue moving the transmitting coil to the right until the re-acquired efficiency loss is greater than -4 and the re-acquired temperature loss is less than 5.

It should be noted that in other possible implementations the power transmitting device may adjust the position of the transmitting coil until the charging temperature indication information does not satisfy the second predetermined condition, and the position adjustment of the transmitting coil is stopped.

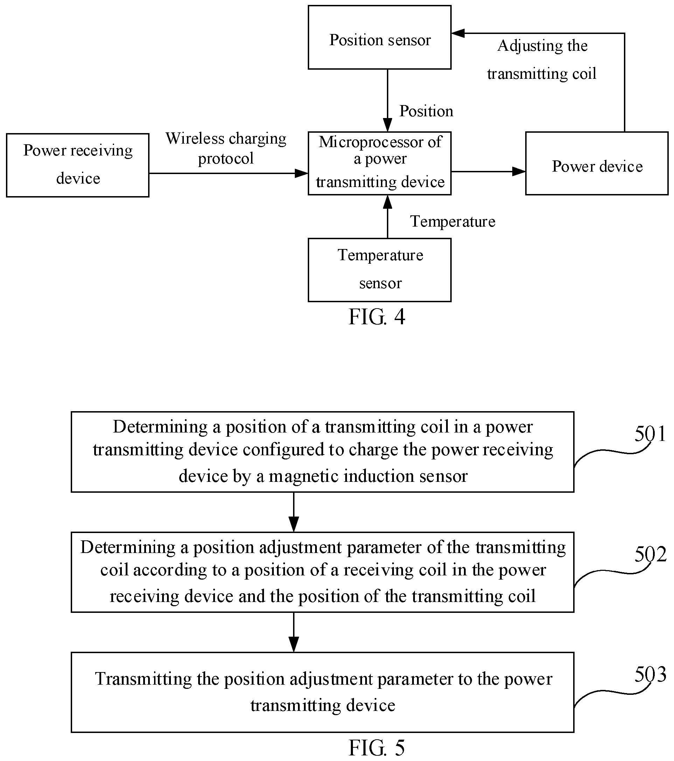

FIG 4 exemplarily illustrates a schematic diagram of a closed-loop control system. The closed-loop control system includes a power receiving device, a microprocessor of a power transmitting device, a power device, a temperature sensor and a position sensor. The power receiving device transmits a current electric quantity and a received power to the microprocessor of the power transmitting device. The microprocessor determines the charging efficiency indication information according to the current electric quantity, the received power, and a transmitted power of the power transmitting device. The microprocessor determines charging temperature indication information according to the current electric quantity and a current temperature collected by the temperature sensor. The microprocessor detects whether the charging efficiency indication information satisfies a first predetermined condition, and whether the charging temperature indication information satisfies a second predetermined condition. If one of the predetermined conditions is satisfied, the microprocessor controls the power device to adjust the transmitting coil. The position sensor acquires a position of the adjusted transmitting coil, and transmits the position to the microprocessor. The microprocessor judges whether the adjusted transmitting coil satisfies a predetermined condition, and re-controls the power device to adjust the transmitting coil until the predetermined condition is not satisfied.

In a second case, the power receiving device transmits position offset indication information to the power transmitting device, and the power transmitting device adjust the position of the transmitting coil according to the position offset indication information transmitted by the power receiving device.

The power receiving device transmits a position adjustment parameter to the power transmitting device, and the position adjustment parameter is used to indicate an adjustment direction and an adjustment distance of the transmitting coil. The process of determining the position adjustment parameter may be referenced to the embodiments hereinafter, which is not described herein any further.

Correspondingly, the power transmitting device receives the position adjustment parameter transmitted by the power receiving device.

The position of the transmitting coil may be adjusted in the following approaches.
1. The adjustment direction and the adjustment distance are determined according to the position adjustment parameter.
2. The position of the transmitting coil is adjusted according to the adjustment direction and the adjustment distance.

In summary, in the technical solution according to the embodiment of the present disclosure, the power transmitting device may adjust the position of the transmitting coil in two ways, and thus flexibility of the adjustment is high. The power transmitting device adaptively adjusts the position of the transmitting coil, and no additional resource device needs to be arranged in the power receiving device. The position of the transmitting coil is adjusted according to the position adjustment parameter transmitted by the power receiving device. The transmitting coil may be efficiently adjusted to a proper position according to the adjustment direction and the adjustment distance and less time is consumed.

FIG 5 is a flowchart of a method for adjusting a coil position according to another exemplary embodiment of the present disclosure. The method can be applied to the power receiving device 20 as described above. The method can include the following steps (steps 501 to 503).

Step 501: a position of a transmitting coil in a power transmitting device configured to charge the power receiving device is determined by a magnetic induction sensor.

The magnetic induction sensor refers to a device capable of extracting information from a magnetic field, which may convert a magnetic signal to an electrical signal. In the embodiment of the present disclosure, a magnetic induction sensor may be arranged in the power receiving device, and the magnetic induction sensor may be arranged on the main board of the power receiving device. By the magnetic induction sensor, the power receiving device may determine the position of the transmitting coil in the power transmitting device.

Step 502: a position adjustment parameter of the transmitting coil is determined according to a position of a receiving coil in the power receiving device and the position of the transmitting coil.

In the embodiment of the present disclosure, the position adjustment parameter is used to indicate an adjustment direction and an adjustment distance of the transmitting coil.

After the position of the transmitting coil is determined, a position adjustment parameter of the power transmitting device may be determined in combination with the position of the receiving coil in the power receiving device. The position adjustment parameter is used to adjust a relative position between the receiving coil and the transmitting coil to align the receiving coil with the transmitting coil.

In a possible implementation, a relative position vector between the receiving coil and the transmitting coil may be directly calculated according to the position of the receiving coil and the position of the transmitting coil. The relative position vector includes a direction of the relative position and a distance of the relative position. Further, the position adjustment parameter of the power receiving device may be determined according to the relative position vector between the receiving coil and the transmitting coil.

In another possible implementation, the position adjustment parameter may be determined according to a first relative position vector between the receiving coil and the magnetic induction sensor, and a second relative position vector between the magnetic induction sensor and the transmitting coil. For introduction of this possible implementation, reference may be made to the embodiments hereinafter, which is not described herein any further.

Step 503: the position adjustment parameter is transmitted to the power transmitting device.

The power transmitting device receives the position adjustment parameter, and adjusts the position of the transmitting coil according to the position adjustment parameter.

In summary, in the technical solution according to the embodiment of the present disclosure, the position adjustment parameter of the transmitting coil is determined by the power receiving device according to the position of the receiving coil and the position of the transmitting coil, and the determined position parameter is transmitted to the power transmitting device, such that the power transmitting device adjusts the position of the transmitting coil according to the position adjustment parameter. In this way, adjustment of the position of the transmitting coil is quick and consumes less time.

In one example, the position of the transmitting coil may be determined as follows.
1. A magnetic field parameter of the magnet arranged in the power transmitting device is collected by the magnetic induction sensor.

In the embodiment of the present disclosure, the power transmitting device may be provided with a magnet. By a magnetic field generated by the magnet, the relative position between the power receiving device and the power transmitting device may be further adjusted.

The central position of the magnet is aligned with the central position of the transmitting coil.

In some embodiments, the magnet may be a circular magnet. In one aspect, when the magnet is a circular magnet, alignment of the central position with the central position of the transmitting coil is favorable to accurately determine the position of the transmitting coil. In another aspect, the circular magnet has a uniform magnetic field distribution, and thus facilitates the magnetic induction sensor to acquire the magnetic field parameter. In some other embodiments, the magnet may be in any other shapes, which is not limited in the embodiment of the present disclosure.

In addition, the magnet may also be arranged above the transmitting coil, or may also be arranged below the transmitting coil, which is not limited in the embodiment of the present disclosure.

In some embodiments, the power transmission may further include an isolation magnetic sheet, which may be configured for magnetic conduction, magnetic block, heat conduction, or the like. The isolation magnetic sheet may be a hard magnetic sheet or a soft magnetic sheet. In a case that the isolation magnetic sheet is a hard magnetic sheet, the magnetic sheet may be a ferrite sheet that is fabricated by high-temperature sintering and has a high magnetic permeability. In a case that the isolation magnetic sheet is a soft magnetic sheet, the magnetic sheet may be a soft magnetic sheet fabricated by alloy magnetic powder, plastic, rubber or the like and has merits such as soft textures, small thickness, and high customization degree.

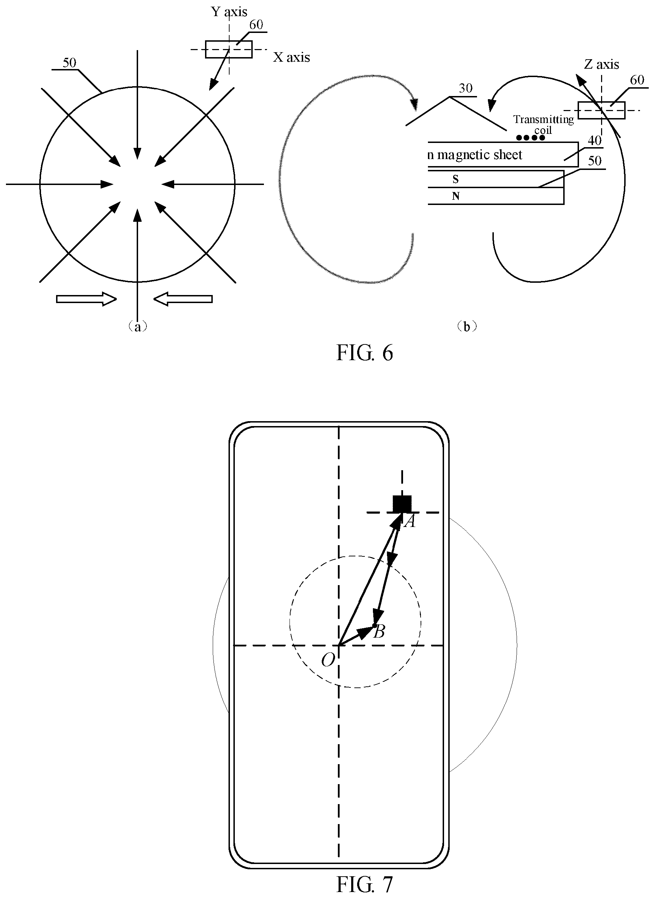

Exemplarily, with reference to panel (b) in FIG 6, a transmitting coil 30, an isolation magnetic sheet 40 and a magnet 50 are stacked in sequence from top to bottom, and centers of the transmitting coil 30, the isolation magnetic sheet 40 and the magnet 50 are on the same straight line.

2. The position of the transmitting coil is determined according to the magnetic field parameter of the magnet.

The magnetic field parameter of the magnet refers to a parameter relevant to the magnetic field generated by the magnet. The magnetic field parameter may include a magnetic field direction and a magnetic field magnitude. The magnetic field direction refers to a direction to which a magnetic induction line points, and the magnetic field magnitude refers to a magnetic field strength of the magnetic field.

Since the central position of the magnet is aligned with the central position of the transmitting coil of the power transmitting device, the direction of the magnetic field generates by the magnet points to the central position of the magnet, and also points to the central position of the transmitting coil. Therefore, after the magnetic induction sensor acquires the magnetic field parameter of the magnet, the position of the transmitting coil may be further determined according to the magnetic field parameter of the magnet.

2.1. A magnetic field component in a horizontal direction of the magnet is determined according to the magnetic field parameter of the magnet.

The magnetic field parameter of the magnet includes a magnetic field direction and a magnetic field magnitude. When the magnetic field generated by the magnet passes through the magnetic induction sensor, magnetic field components may be generated in different directions.

Exemplarily, with reference to panel (a) and panel (b) in FIG 6, panel (a) illustrates a schematic diagram of a magnetic field component on an XY plane (that is, the horizontal direction), and panel (b) illustrates a schematic diagram of a magnetic field component in an Z axis. A magnet 50 is arranged below the transmitting coil 30 of the power transmitting device. When the power receiving device 20 is placed on the power transmitting device, a magnetic field generated by the magnet 50 may pass through a magnetic induction sensor 60 and magnetic field components are formed in an X axis, Y axis, and Z axis.

2.2 The position of the transmitting coil is determined according to the magnetic field component and a first mapping relationship.

When the magnetic induction sensor is away from the magnet in the power transmitting device, the magnetic induction sensor acquires a small magnetic field component; and when the magnetic induction sensor is close to the magnet in the power transmitting device, the magnetic induction sensor acquires a larger magnetic field component. Since the central position of the magnet is aligned with the central position of the transmitting coil in the power transmitting device, a certain mapping relationship exists between the magnetic field component and the position of the transmitting coil.

The first mapping relationship is used to describe the mapping relationship between the magnetic field component and the position of the transmitting coil. In a case that the magnetic field component is determined, the position of the transmitting coil is determined according to the first mapping relationship.

In some embodiments, before the position of the transmitting coil is determined according to the magnetic field component and the target mapping relationship, the first mapping relationship may be determined by the following steps.
(1) collecting n positions of the transmitting coil, n being an integer greater than 1;
(2) acquiring a magnetic field component corresponding to each of the n positions by the magnetic induction sensor; and
(3) determining a target mapping relationship according to the n positions and the magnetic field components corresponding to the n positions.

The power receiving device may acquire n different positions of the transmitting coil, and the magnetic induction sensor acquires different magnetic field components at different positions. A mapping relationship, that is, the first mapping relationship, between the magnetic field component and the position of the transmitting coil may be obtained by fitting and according to the n positions and the magnetic field components corresponding to the n positions.

In another example, the position of the transmitting coil may also be determined as follows.
1. The magnetic field parameter of the transmitting coil is collected by the magnetic induction sensor.

The magnetic induction sensor refers to a device capable of extracting information from a magnetic field, which is capable of converting a magnetic signal to an electrical signal. In the embodiment of the present disclosure, a magnetic induction sensor may be arranged in the power receiving device, and the magnetic induction sensor may be arranged on the main board of the power receiving device. By the magnetic induction sensor, the power receiving device may acquire the magnetic field parameter of the transmitting coil in the power transmitting device.

In one example, a magnetic field parameter of a first magnetic field of the transmitting coil is collected by the magnetic induction sensor according to a first sampling frequency; and the magnetic field parameter of the transmitting coil is determined according to the magnetic field parameter of the first magnetic field collected by the sampling.

The first magnetic field is a magnetic field generated by the transmitting coil for wireless charging, that is, a magnetic field of the transmitting coil when the transmitting coil wirelessly charges the power receiving device. In this case, since an alternating current flows through the transmitting coil, the first magnetic field is also an alternating magnetic field. Exemplarily, a magnetic field parameter *β* of the transmitting coil may be represented by: $β = A sin \left(2πf*t+θ\right)$

*A* represents an amplitude, *f* represents a frequency of the alternating current in the transmitting coil, t represents time, and *θ* represents a phase angle.

In this case, according to the sampling theorem, when a first sampling frequency of the magnetic inductor sensor in the power receiving device is greater than or equal to 2f, the magnetic field parameters collected by the magnetic induction sensor may include all the magnetic field parameters of the first magnetic field of the transmitting coil, and by the collected magnetic field parameters, the magnetic field parameters of the first magnetic field of the transmitting coil may be restored. The above sampling theorem may also be referred to as Shannon sampling theorem or Nyquist sampling theorem. This sampling theorem indicates that when the sampling frequency is greater than or equal to twice of a maximum frequency of a valid signal, a sampling value may include all the information of the original signal and a sampled signal may be restored to the original signal without any distortion.

The magnetic induction sensor acquires a plurality of magnetic field parameters of the first magnetic field of the transmitting coil according to the first sampling frequency, and further obtains, by fitting, a change curve of the magnetic field parameter of the first magnetic field with the time. According to the change curve, an amplitude (maximum value) of the magnetic field parameters of the first magnetic field may be collected, and thus the amplitude is determined as the magnetic field parameter of the transmitting coil.

In addition, when the plurality of magnetic field parameters collected by the magnetic induction sensor includes the above amplitude, the amplitude from the plurality of magnetic field parameters may be directly determined as the magnetic field parameter of the transmitting coil.

In another example, a magnetic field parameter of a second magnetic field of the transmitting coil is collected by the magnetic induction sensor according to a second sampling frequency, and the second magnetic field refers to another magnetic field generated by the transmitting coil in addition to the magnetic field used for wireless charging. The magnetic field parameter of the transmitting coil is determined according to the magnetic field parameter of the second magnetic field collected by sampling.

In the wireless communication protocols, the transmitting coil may generate another magnetic field, for example, a second magnetic field, in addition to the magnetic field for wireless charging. The second magnetic field is also an alternating magnetic field, and a variation frequency of the second magnetic field is lower than that of the first magnetic field.

In this case, the magnetic induction sensor in the power receiving device may collect the magnetic field parameters of the second magnetic field of the transmitting coil according to the second sampling frequency. The second sampling frequency is greater than or equal to twice of the variation frequency of the second magnetic field.

The magnetic induction sensor acquires a plurality of magnetic field parameters of the second magnetic field of the transmitting coil according to the second sampling frequency, and further obtains, by fitting, a change curve of the magnetic field parameter of the second magnetic field with the time. According to the change curve, an amplitude (maximum value) of the magnetic field parameters of the second magnetic field may be acquired, and thus the amplitude is determined as the magnetic field parameter of the transmitting coil.

In addition, when the plurality of magnetic field parameters collected by the magnetic induction sensor includes the above amplitude, the amplitude from the plurality of magnetic field parameters may be directly determined as the magnetic field parameter of the transmitting coil.

According to the above embodiment, when the sampling frequency of the magnetic induction sensor is less than twice of the variation frequency of the first magnetic field, the transmitting coil may additionally generate another magnetic field in addition to the magnetic field for wireless charging, and the magnetic field parameter of the transmitting coil may be determined according to the magnetic parameter of the magnetic field.

2. The position of the transmitting coil is determined according to the magnetic field parameter of the transmitting coil.

The magnetic field parameter of the transmitting coil refers to a parameter relevant to the magnetic field generated by the transmitting coil. The magnetic field parameter may include a magnetic field direction and a magnetic field magnitude. The magnetic field direction refers to a direction pointed by a magnetic induction line, and the magnetic field magnitude refers to a magnetic field strength of the magnetic field.

After the magnetic induction sensor acquires the magnetic field parameter of the transmitting coil, the position of the transmitting coil may be further determined according to the magnetic field parameter of the transmitting coil.

2.1. A magnetic field component in a horizontal direction of the transmitting coil is determined according to the magnetic field parameter of the transmitting coil.

The magnetic field parameter of the transmitting coil includes a magnetic field direction and a magnetic field magnitude. When the magnetic field generated by the transmitting coil passes through the magnetic induction sensor, magnetic field components may be generated in different directions. When the power receiving device is placed on the power transmitting device, a magnetic field generated by the transmitting coil may pass through a magnetic induction sensor, and magnetic field components are formed in an X axis, Y axis, and Z axis.

2.2 The position of the transmitting coil is determined according to the magnetic field component and a second mapping relationship.

When the magnetic induction sensor is away from the transmitting coil in the power transmitting device, the magnetic induction sensor acquires a small magnetic field component; and when the magnetic induction sensor is close to the transmitting coil in the power transmitting device, the magnetic induction sensor acquires a larger magnetic field component. Therefore, a certain mapping relationship exists between the magnetic field component and the position of the transmitting coil.

The second mapping relationship is used to describe the mapping relationship between the magnetic field component and the position of the transmitting coil. In a case that the magnetic field component is determined, the position of the transmitting coil may be determined according to the second mapping relationship.

In some embodiments, the position adjustment parameter may be determined according to a first relative position vector between the receiving coil and the magnetic induction sensor, and a second relative position vector between the magnetic induction sensor and the transmitting coil.

Since the magnetic induction sensor and the receiving coil are both arranged on the power receiving device, the first relative position vector between the receiving coil and the magnetic induction sensor is known and fixed. In addition, after the position of the transmitting coil is acquired, the second relative position vector between the magnetic induction sensor and the transmitting coil may be further acquired, and hence the position adjustment parameter may be determined.

The relative position vector includes a relative position distance and a relative position direction. The position adjustment parameter includes an adjustment direction and an adjustment direction, and the adjustment direction points to the central position of the transmitting coil.

Exemplarily, with reference to FIG 7, a coordinate system is established with the center of the receiving coil, and the relative position relationships between the receiving coil, the magnetic induction sensor and the transmitting coil are described by using the coordinate system. Point O represents the position of the receiving coil, point A represents the position of the magnetic induction sensor, and point B represents the position of the transmitting coil. Vector OA represents the first relative position vector between the receiving coil and the magnetic induction sensor, and vector AB represents the second relative position vector between the magnetic induction sensor and the transmitting coil. According to the vector calculation laws, vector OB may be obtained, and the vector OB represents the position adjustment parameter.

Apparatus embodiments according to the present disclosure are described hereinafter, and apparatuses in the embodiments hereinafter may be used for performing the method embodiments. Details that are not disclosed in the apparatus embodiments may be referenced to the method embodiments.

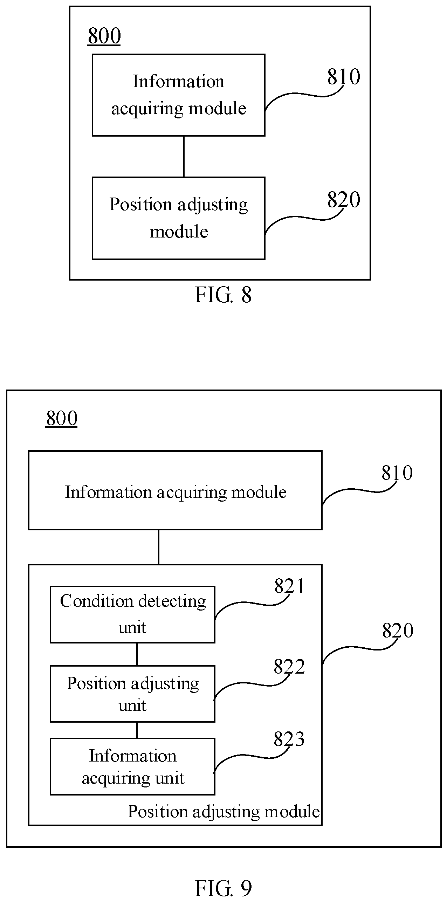

FIG 8 is a block diagram of a coil position adjustment apparatus 800 according to some embodiments of the present disclosure. The apparatus has the functions of realizing the above method examples. The functions may be implemented by hardware, or may be implemented by software which is performed by the hardware. The apparatus may be the power transmitting device as described above or may be arranged on the power transmitting device. As illustrated in FIG 8, the apparatus 800 may include an information acquiring module 810 and a position adjusting module 820.

The information acquiring module 810 is configured to acquire position offset indication information between a transmitting coil in the power transmitting device and a receiving coil in a power receiving device. The power transmitting device is configured to wirelessly charge the power receiving device, and the position offset indication information is used to reflect a position offset between the transmitting coil and the receiving coil.

The position adjusting module 820 is configured to adjust a position of the transmitting coil according to the position offset indication information.

As such, in the technical solution according to the embodiment of the present disclosure, the coil position is adjusted by the power transmitting device according to the position offset between the transmitting coil and the receiving coil. If the power receiving device is not properly placed on the power transmitting device, the position of the transmitting coil is automatically adjusted, such that a geometric center of the transmitting coil coincides with or approaches that of the receiving coil as far as possible. In this way, the charging efficiency of the power receiving device is improved.

In some embodiments, the position offset indication information includes charging efficiency indication information, and the charging efficiency indication information is used to indicate a charging efficiency of the wireless charging.

As illustrated in FIG 9, the position adjusting module 820 includes a condition detecting component 821, a position adjusting component 822, and an information acquiring component 823.

The condition detecting component 821 is configured to detect whether the charging efficiency indication information satisfies a first predetermined condition.

The position adjusting component 822 is configured to adjust the position of the transmitting coil if the charging efficiency indication information satisfies the first predetermined condition.

The information acquiring component 823 is configured to re-acquire the charging efficiency indication information after the adjustment of the position of the transmitting coil, and detect whether the charging efficiency indication information satisfies the first predetermined condition by the condition detecting component until the charging efficiency indication information does not satisfy the first predetermined condition, and the position adjustment of the transmitting coil is stopped.

In some embodiments, the information acquiring module 810 is configured to:
acquire a transmitted power of the power transmitting device and a received power of the power receiving device;
calculate a charging efficiency according to the transmitted power and the received power; and
determine the charging efficiency indication information according to the charging efficiency.

In some embodiments, the position offset indication information further includes charging temperature indication information, and the charging temperature indication information is used to indicate a temperature of the power transmitting device.

The condition detecting component 821 is further configured to detect whether the charging temperature indication information satisfies a second predetermined condition.

The position adjusting component 822 is further configured to adjust the position of the transmitting coil if the charging temperature indication information satisfies the second predetermined condition.

The information acquiring component is further configured to re-acquire the charging temperature indication information after the adjustment of the position of the transmitting coil, and re-detect whether the charging temperature indication information satisfies the second predetermined condition by the condition detecting component until the charging efficiency indication information does not satisfy the first predetermined condition and the charging temperature indication information does not satisfy the second predetermined condition, and the position adjustment of the transmitting coil is stopped.

In some embodiments, the information acquiring module 810 is further configured to:
receive a position adjustment parameter from the power receiving device, and the position adjustment parameter is used to indicate an adjustment direction and an adjustment distance of the transmitting coil.

In some embodiments, the position adjusting module 820 is further configured to:
determine the adjustment direction and an adjustment distance of the transmitting coil according to the position adjustment parameter; and
adjust the position of the transmitting coil according to the adjustment direction and the adjustment distance.

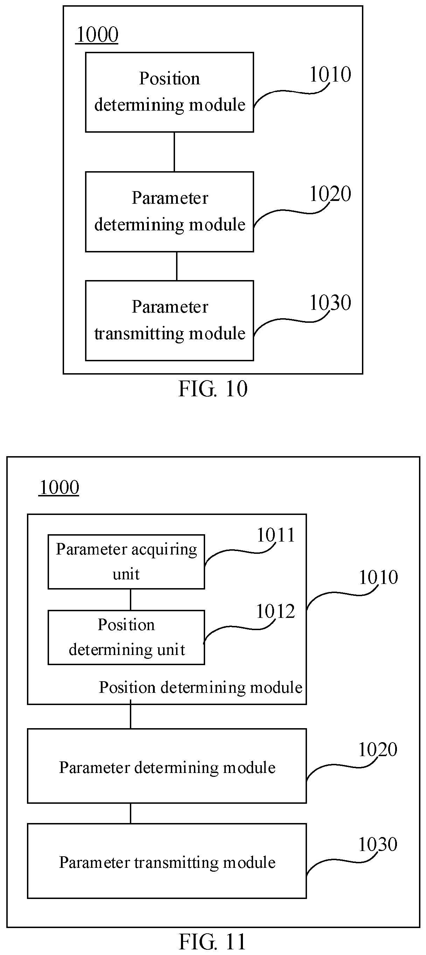

FIG 10 is a block diagram of an apparatus for adjusting a coil position according to another exemplary embodiment of the present disclosure. The apparatus has the functions of realizing the above method examples. The functions may be implemented by hardware, or may be implemented by corresponding software which is performed by hardware. The apparatus may be the power receiving device as described above or may be arranged on the power receiving device. As illustrated in FIG 10, the apparatus 1000 may include a position determining module 1010, a parameter determining module 1020, and a parameter transmitting module 1030.

The position determining module 1010 is configured to determine a position of a transmitting coil in a power transmitting device configured to wirelessly charge the power receiving device by a magnetic induction sensor.

The parameter determining module 1020 is configured to determine a position adjustment parameter of the transmitting coil according to a position of a receiving coil in the power receiving device and a position of the transmitting coil, and the position adjustment parameter is used to indicate an adjustment direction and an adjustment distance of the transmitting coil.

The parameter transmitting module 1030 is configured to transmit the position adjustment parameter to the power transmitting device.

As such, in some embodiments of the present disclosure, the position adjustment parameter of the transmitting coil is determined by the power receiving device according to the position of the receiving coil and the position of the transmitting coil, and the position adjustment parameter is transmitted to the power transmitting device, such that the power transmitting device adjusts the position of the transmitting coil according to the position adjustment parameter. In this way, adjustment of the position of the transmitting coil is quick and consumes less time.

In some embodiments, as illustrated in FIG 11, the position determining module 1010 includes a parameter acquiring component 1011 and a position determining component 1012.

The parameter acquiring component 1011 is configured to acquire a magnetic field parameter of a magnet in the power transmitting device by the magnetic induction sensor, and a central position of the magnet is aligned with a central position of the transmitting coil.

The position determining component 1012 is configured to determine the position of the transmitting coil according to the magnetic field parameter of the magnet.

In some embodiments, the position determining module 1012 is configured to:
determine a magnetic field component in a horizontal direction of the magnet according to the magnetic field parameter of the magnet, and the magnetic field parameter includes a magnetic field direction and a magnetic field magnitude; and
determine the position of the transmitting coil according to the magnetic field component and a first mapping relationship, the first mapping relationship being used to describe mapping between the magnetic field component and the position of the transmitting coil.

In some embodiments, the position determining module 1010 includes:
a parameter acquiring component 1011, configured to acquire a magnetic field parameter of the transmitting coil by a magnetic induction sensor; and
a position determining component 1012, configured to determine the position of the transmitting coil according to the magnetic field parameter of the transmitting coil.

In some embodiments, the parameter determining module 1011 is configured to:
collect a magnetic field parameter of a first magnetic field of the transmitting coil by the magnetic induction sensor according to a first sampling frequency, the first magnetic field being a magnetic field generated by the transmitting coil for wireless charging; and determine the magnetic field parameter of the transmitting coil according to the magnetic field parameter of the first magnetic field acquired by sampling;
   or
collect a magnetic field parameter of a second magnetic field of the transmitting coil by the magnetic induction sensor according to a second sampling frequency, the second magnetic field being another magnetic field generated by the transmitting coil in addition to the magnetic field for wireless charging; and determine the magnetic field parameter of the transmitting coil according to the magnetic field parameter of the second magnetic field acquired by sampling.

In some embodiments, the position determining module 1012 is configured to:
determine a magnetic field component in a horizontal direction of the transmitting coil according to the magnetic field parameter of the transmitting coil, the magnetic field parameter of the transmitting coil including a magnetic field direction and a magnetic field magnitude; and
determine the position of the transmitting coil according to the magnetic field component and a second mapping relationship, the second mapping relationship being used to describe mapping between the magnetic field component and the position of the transmitting coil.

It should be noted that, during implementation of the functions of the apparatus according to the above embodiment, the apparatus is described by only using division of the above functional modules as examples. In practice, the functions may be assigned to different functional modules for implementation as required. To be specific, the internal structure of the apparatus is divided into different functional modules to implement all or part of the above-described functions.

With respect to the apparatus in the above embodiment, details about performing corresponding operations by different modules have been described in the method embodiment, which are not given herein any further.

Some embodiments of the present disclosure further provide a device for use in coil position adjustment, which may implement the method according to the present disclosure. The apparatus has the functions of practicing the above method examples. The functions may be implemented by hardware, or may be implemented by corresponding software which is performed by hardware. The apparatus may be the power transmitting device as described above or may be arranged on the power transmitting device. The device includes a processor and a memory for storing executable instructions. The processor is configured to:
acquire position offset indication information between a transmitting coil in the power transmitting device and a receiving coil in a power receiving device; wherein the power transmitting device is configured to wirelessly charge the power receiving device, and the position offset indication information is used to reflect a position offset between the transmitting coil and the receiving coil; and
adjust a position of the transmitting coil according to the position offset indication information.

In some embodiments, the position offset indication information includes charging efficiency indication information, and the charging efficiency indication information is used to indicate a charging efficiency of the wireless charging; and

The processor is configured to:
detect whether the charging efficiency indication information satisfies a first predetermined condition;
adjust the position of the transmitting coil if the charging efficiency indication information satisfies the first predetermined condition; and
after the adjustment of the position of the transmitting coil, re-acquire the charging efficiency indication information, perform the step of detecting whether the charging efficiency indication information satisfies the first predetermined condition again until the charging efficiency indication information does not satisfy the first predetermined condition, and stop adjusting the position of the transmitting coil.

In some embodiments, the processor is configured to:
acquire a transmitted power of the power transmitting device and a received power of the power receiving device;
calculate a charging efficiency according to the transmitted power and the received power; and
determine the charging efficiency indication information according to the charging efficiency.

In some embodiments, the position offset indication information further includes charging temperature indication information, and the charging temperature indication information is used to indicate a temperature of the power transmitting device; and
the processor is further configured to:
detect whether the charging temperature indication information satisfies a second predetermined condition;
adjust the position of the transmitting coil if the charging temperature indication information satisfies the second predetermined condition; and after the adjustment of the position of the transmitting coil, re-acquire the charging temperature indication information, re-perform the step of detecting whether the charging temperature indication information satisfies the second predetermined condition until the charging efficiency indication information does not satisfy the first predetermined condition and the charging temperature indication information does not satisfy the second predetermined condition, and stop adjusting the position of the transmitting coil.

In some embodiments, the processor is further configured to:
receive a position adjustment parameter from the power receiving device, the position adjustment parameter being used to indicate an adjustment direction and an adjustment distance of the transmitting coil.

In some embodiments, the processor is further configured to:
determine the adjustment direction and an adjustment distance of the transmitting coil according to the position adjustment parameter; and
adjust the position of the transmitting coil according to the adjustment direction and the adjustment distance.

Some embodiments of the present disclosure further provide a device for adjusting the coil position, which may implement the method according to the present disclosure. The apparatus has the functions of realizing the above method examples. The functions may be implemented by hardware, or may be implemented by corresponding software which is performed by hardware. The apparatus may be the power receiving device as described above or may be arranged on the power receiving device. The device includes a processor and a memory for storing executable instructions. The processor is configured to:
determine a position of a transmitting coil in a power transmitting device configured to charge the power receiving device by a magnetic induction sensor;
determine a position adjustment parameter of the transmitting coil according to a position of a receiving coil in the power receiving device and the position of the transmitting coil, wherein the position adjustment parameter is used to indicate an adjustment direction and an adjustment distance of the transmitting coil; and
transmit the position adjustment parameter to the power transmitting device.

In some embodiments, the processor is configured to:
acquire a magnetic field parameter of a magnet arranged in the power transmitting device by the magnetic induction sensor, wherein a central position of the magnet is aligned with a central position of the transmitting coil; and
determine the position of the transmitting coil according to the magnetic field parameter of the magnet.

In some embodiments, the processor is further configured to:
determine a magnetic field component in a horizontal direction of the magnet according to the magnetic field parameter of the magnet, the magnetic field parameter including a magnetic field direction and a magnetic field magnitude; and
determine the position of the transmitting coil according to the magnetic field component and a first mapping relationship, and the first mapping relationship being used to describe mapping between the magnetic field component and the position of the transmitting coil.

In some embodiments, the processor is further configured to:
acquire a magnetic field parameter of the transmitting coil by a magnetic induction sensor; and
determine the position of the transmitting coil according to the magnetic field parameter of the transmitting coil.

In some embodiments, the processor is further configured to:
collect a magnetic field parameter of a first magnetic field of the transmitting coil by the magnetic induction sensor according to a first sampling frequency, the first magnetic field being a magnetic field generated by the transmitting coil for wireless charging; and determine the magnetic field parameter of the transmitting coil according to the magnetic field parameter of the first magnetic field acquired by sampling;
   or
acquire a magnetic field parameter of a second magnetic field of the transmitting coil by the magnetic induction sensor according to a second sampling frequency, the second magnetic field being another magnetic field generated by the transmitting coil in addition to the magnetic field for wireless charging; and determine the magnetic field parameter of the transmitting coil according to the magnetic field parameter of the second magnetic field acquired by sampling.

In some embodiments, the processor is further configured to:
determine a magnetic field component in a horizontal direction of the transmitting coil according to the magnetic field parameter of the transmitting coil, the magnetic field parameter of the transmitting coil including a magnetic field direction and a magnetic field magnitude; and
determine the position of the transmitting coil according to the magnetic field component and a second mapping relationship, the second mapping relationship being used to describe mapping between the magnetic field component and the position of the transmitting coil.

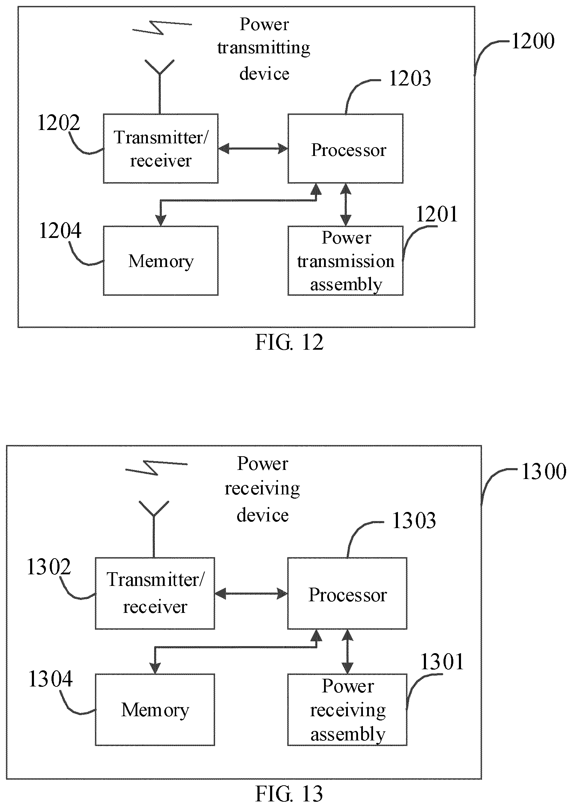

FIG 12 is a schematic structural diagram of a power transmitting device 1200 according to some embodiments of the present disclosure. The power transmitting device 1200 may include a power transmission assembly 1201, a transmitter/receiver 1202, and a processor 1203.

The power transmission assembly 1201 is configured to wirelessly charge a power receiving device. The power transmission assembly 1201 may wirelessly charge the power receiving device by electromagnetic induction. In the embodiment of the present disclosure, no limitation is set to the constitution and structure of the power transmission assembly 1201.

The transmitter/receiver 1202 is configured to support communication between the power transmitting device 1200 and other devices (for example, the power receiving device and/or other power transmitting devices).

The processor 1203 controls and manages the action of the power transmitting device 1200, and is configured to perform the operations of the power transmitting device 1200. For example, the processor 1203 may be further configured to perform the steps in the above method embodiments, and/or other steps in the technical solutions described in the embodiments of the present disclosure.

Further, the power transmitting device 1200 may include a memory 1204, wherein the memory 1204 is configured to store program code and data of the power transmitting device 1200.

It may be understood that FIG 12 only illustrates a simplified design of the power transmitting device 1200. In practical application, the power transmitting device 1200 may include more or fewer components, and all the power transmitting devices that may realize the embodiments of the present disclosure shall fall within the protection scope of the embodiments of the present disclosure.

FIG 13 is a schematic structural diagram of a power receiving device 1300 according to some embodiments of the present disclosure. The power receiving device 1300 may include a power receiving assembly 1301, a transmitter/receiver 1302, and a processor 1303.

The power receiving assembly 1301 is configured to receive a wireless charging power supplied by the power transmitting device. The power receiving assembly 1301 may receive, by electromagnetic induction, the wireless charging power supplied by the power transmitting device. In the embodiment of the present disclosure, no limitation is set to the constitution and structure of the power receiving assembly 1301.

The transmitter/receiver 1302 is configured to support communication between the power receiving device 1300 and other devices (for example, the power transmitting device and/or other power receiving devices).

The processor 1303 controls and manages the action of the power receiving device 1300, and is configured to perform the operations of the power receiving device 1300. For example, the processor 1303 may be further configured to perform the steps in the above method embodiments, and/or other steps in the technical solutions described in the embodiments of the present disclosure.

Further, the power receiving device 1300 may include a memory 1304, wherein the memory 1304 is configured to store program code and data of the power receiving device 1300.

It may be understood that FIG 13 only illustrates a simplified design of the power receiving device 1300. In practical application, the power receiving device 1300 may include more or fewer components, and all the power receiving devices that may practice the embodiments of the present disclosure shall fall within the protection scope of the embodiments of the present disclosure.

An embodiment of the present disclosure further provides a non-transitory computer-readable storage medium which stores a computer program. When the computer program is performed by a processor of a power transmitting device, the above-mentioned method for adjusting a coil position on the power transmitting device side is realized.

An embodiment of the present disclosure further provides a non-transitory computer-readable storage medium which stores a computer program. When the computer program is performed by a processor of a power transmitting device, the above-mentioned method for adjusting a coil position on the power receiving device side is realized.

In some embodiments, the non-transitory computer-readable storage medium may be a ROM (Read-Only Memory), a RAM (Random Access Memory), a CD-ROM, a magnetic tape, a floppy disc, an optical data storage device, and the like.

The processor can execute the instructions stored on the medium to determine, by a magnetic induction sensor, a position of a transmitting coil in a power transmitting device configured to wirelessly charge the power receiving device; determine a position adjustment parameter of the transmitting coil according to a position of a receiving coil in the power receiving device and the position of the transmitting coil, wherein the position adjustment parameter is used to indicate an adjustment direction and an adjustment distance of the transmitting coil; and transmit the position adjustment parameter to the power transmitting device.

In some embodiments, the position offset indication information includes charging efficiency indication information, the charging efficiency indication information being used to indicate a charging efficiency of the wireless charging; and
adjusting the position of the transmitting coil according to the position offset indication information includes:
detecting whether the charging efficiency indication information satisfies a first predetermined condition;
adjusting the position of the transmitting coil if the charging efficiency indication information satisfies the first predetermined condition; and
after the adjustment of the position of the transmitting coil, re-acquiring the charging efficiency indication information, re-performing the step of detecting whether the charging efficiency indication information satisfies the first predetermined condition until the charging efficiency indication information does not satisfy the first predetermined condition, and stopping adjusting the position of the transmitting coil.

In some embodiments, the acquiring the position offset indication information between the transmitting coil in the power transmitting device and the receiving coil in the power receiving device includes:
acquiring a transmitted power of the power transmitting device and a received power of the power receiving device;
calculating a charging efficiency according to the transmitted power and the received power; and
determining the charging efficiency indication information according to the charging efficiency.

In some embodiments, the position offset indication information further includes charging temperature indication information, the charging temperature indication information is used to indicate a temperature of the power transmitting device; and
the method further includes:
detecting whether the charging temperature indication information satisfies a second predetermined condition;
adjusting the position of the transmitting coil if the charging temperature indication information satisfies the second predetermined condition; and after the adjustment of the position of the transmitting coil, re-acquiring the charging temperature indication information, re-performing the steps from detecting whether the charging temperature indication information satisfies the second predetermined condition until the charging efficiency indication information does not satisfy the first predetermined condition and the charging temperature indication information does not satisfy the second predetermined condition, and stopping adjusting the position of the transmitting coil.

In some embodiments, the acquiring the position offset indication information between the transmitting coil in the power transmitting device and the receiving coil in the power receiving device includes:
receiving a position adjustment parameter transmitted from the power receiving device, the position adjustment parameter being used to indicate an adjustment direction and an adjustment distance of the transmitting coil.

In some embodiments, the adjusting the position of the transmitting coil according to the position offset indication information includes:
determining the adjustment direction and the adjustment distance of the transmitting coil according to the position adjustment parameter; and
adjusting the position of the transmitting coil according to the adjustment direction and the adjustment distance.

On the power receiving device side, in some embodiments, the determining, by the magnetic induction sensor, the position of the transmitting coil in the power transmitting device configured to charge the power receiving device includes:
acquiring a magnetic field parameter of a magnet arranged in the power transmitting device by the magnetic induction sensor, wherein a central position of the magnet is aligned with a central position of the transmitting coil; and
determining the position of the transmitting coil according to the magnetic field parameter of the magnet.

In some embodiments, the determining the position of the transmitting coil according to the magnetic field parameter of the magnet includes:
determining a magnetic field component in a horizontal direction of the magnet according to the magnetic field parameter of the magnet, the magnetic field parameter of the magnet including a magnetic field direction and a magnetic field magnitude; and
determining the position of the transmitting coil according to the magnetic field component and a first mapping relationship, the first mapping relationship being used to describe a mapping relationship between the magnetic field component and the position of the transmitting coil.

In some embodiments, the determining, by the magnetic induction sensor, the position of the transmitting coil in the power transmitting device configured to charge the power receiving device includes:
acquiring a magnetic field parameter of the transmitting coil by a magnetic induction sensor; and
determining the position of the transmitting coil according to the magnetic field parameter of the transmitting coil.

In some embodiments, the acquiring the magnetic field parameter of the transmitting coil by the magnetic induction sensor includes:
collecting a magnetic field parameter of a first magnetic field of the transmitting coil by the magnetic induction sensor according to a first sampling frequency, the first magnetic field being a magnetic field generated by the transmitting coil for wireless charging; and determining the magnetic field parameter of the transmitting coil according to the magnetic field parameter of the first magnetic field acquired by sampling;
   or
collecting a magnetic field parameter of a second magnetic field of the transmitting coil by the magnetic induction sensor according to a second sampling frequency, the second magnetic field being another magnetic field generated by the transmitting coil in addition to the magnetic field for wireless charging; and determining the magnetic field parameter of the transmitting coil according to the magnetic field parameter of the second magnetic field acquired by sampling.

In some embodiments, the determining the position of the transmitting coil according to the magnetic field parameter of the transmitting coil includes:
determining a magnetic field component in a horizontal direction of the transmitting coil according to the magnetic field parameter of the transmitting coil, the magnetic field parameter of the transmitting coil including a magnetic field direction and a magnetic field magnitude; and
determining the position of the transmitting coil according to the magnetic field component and a second mapping relationship, the second mapping relationship being used to describe a mapping relationship between the magnetic field component and the position of the transmitting coil.

In another aspect, an apparatus for adjusting a coil position is provided, which can applied to a power transmitting device. The apparatus includes:
an information acquiring portion, configured to acquire position offset indication information between a transmitting coil in the power transmitting device and a receiving coil in a power receiving device; wherein the power transmitting device is configured to wirelessly charge the power receiving device, and the position offset indication information is used to reflect a position offset between the transmitting coil and the receiving coil; and
a position adjusting portion, configured to adjust a position of the transmitting coil according to the position offset indication information.

In some embodiments, the position offset indication information includes charging efficiency indication information, and the charging efficiency indication information is used to indicate a charging efficiency of the wireless charging;
the position adjusting portion includes:
a condition detecting component, configured to detect whether the charging efficiency indication information satisfies a first predetermined condition;
a position adjusting component, configured to adjust the position of the transmitting coil if the charging efficiency indication information satisfies the first predetermined condition; and
an information acquiring component, configured to, after the adjustment of the position of the transmitting coil, re-acquire the charging efficiency indication information, detect whether the charging efficiency indication information satisfies the first predetermined condition by the condition detecting component again until the charging efficiency indication information does not satisfy the first predetermined condition, and stop adjusting the position of the transmitting coil.

In some embodiments, the information acquiring portion is further configured to:
acquire a transmitted power of the power transmitting device and a received power of the power receiving device;
calculate a charging efficiency according to the transmitted power and the received power; and
determine the charging efficiency indication information according to the charging efficiency.

In some embodiments, the position offset indication information further includes charging temperature indication information, and the charging temperature indication information being used to indicate a temperature of the power transmitting device; and
the condition detecting component is further configured to detect whether the charging temperature indication information satisfies a second predetermined condition;
the position adjusting component is further configured to adjust the position of the transmitting coil if the charging temperature indication information satisfies the second predetermined condition; and
the information acquiring component is further configured to, after the adjustment of the position of the transmitting coil, re-acquire the charging temperature indication information, re-detect whether the charging temperature indication information satisfies the second predetermined condition by the condition detecting component again until the charging efficiency indication information does not satisfy the first predetermined condition and the charging temperature indication information does not satisfy the second predetermined condition, and stop adjusting the position of the transmitting coil.

In some embodiments, the information acquiring portion is further configured to:
receive a position adjustment parameter transmitted from the power receiving device, the position adjustment parameter being used to indicate an adjustment direction and an adjustment distance of the transmitting coil.

In some embodiments, the position adjusting portion is further configured to:
determine the adjustment direction and the adjustment distance of the transmitting coil according to the position adjustment parameter; and
adjust the position of the transmitting coil according to the adjustment direction and the adjustment distance.

In another aspect, an apparatus for adjusting a coil position is provided, which is applied to a power receiving device. The apparatus includes:
a position determining portion, configured to determine, by a magnetic induction sensor, a position of a transmitting coil in a power transmitting device configured to wirelessly charge the power receiving device;
a parameter determining portion, configured to determine a position adjustment parameter of the transmitting coil according to a position of a receiving coil in the power receiving device and the position of the transmitting coil, wherein the position adjustment parameter is used to indicate an adjustment direction and an adjustment distance of the transmitting coil; and
a parameter transmitting portion, configured to transmit the position adjustment parameter to the power transmitting device.

In some embodiments, the position determining portion includes:
a parameter acquiring component, configured to acquire a magnetic field parameter of a magnet arranged in the power transmitting device by the magnetic induction sensor, wherein a central position of the magnet is aligned with a central position of the transmitting coil; and
a position determining component, configured to determine the position of the transmitting coil according to the magnetic field parameter of the magnet.

In some embodiments, the position determining component is further configured to:
determine a magnetic field component in a horizontal direction of the magnet according to the magnetic field parameter of the magnet, the magnetic field parameter including a magnetic field direction and a magnetic field magnitude; and
determine the position of the transmitting coil according to the magnetic field component and a first mapping relationship, the first mapping relationship being used to describe a mapping relationship between the magnetic field component and the position of the transmitting coil.

In some embodiments, the position determining portion includes:
a parameter acquiring component, configured to acquire a magnetic field parameter of the transmitting coil by a magnetic induction sensor; and
a position determining component, configured to determine the position of the transmitting coil according to the magnetic field parameter of the transmitting coil.

In some embodiments, the parameter determining component is further configured to:
collect a magnetic field parameter of a first magnetic field of the transmitting coil by the magnetic induction sensor according to a first sampling frequency, the first magnetic field being a magnetic field generated by the transmitting coil for wireless charging; and determine the magnetic field parameter of the transmitting coil according to the magnetic field parameter of the first magnetic field acquired by sampling;
   or
collect a magnetic field parameter of a second magnetic field of the transmitting coil by the magnetic induction sensor according to a second sampling frequency, the second magnetic field being another magnetic field generated by the transmitting coil in addition to the magnetic field for wireless charging; and determine the magnetic field parameter of the transmitting coil according to the magnetic field parameter of the second magnetic field acquired by sampling.

In some embodiments, the position determining component is further configured to:
determine a magnetic field component in a horizontal direction of the transmitting coil according to the magnetic field parameter of the transmitting coil, the magnetic field parameter of the transmitting coil including a magnetic field direction and a magnetic field magnitude; and
determine the position of the transmitting coil according to the magnetic field component and a second mapping relationship, the second mapping relationship being used to describe a mapping relationship between the magnetic field component and the position of the transmitting coil.

Various embodiments of the present disclosure can have one or more of the following advantages.

The coil position can be adjusted by the power transmitting device according to the position offset between the transmitting coil and the receiving coil. If the power receiving device is not properly placed on the power transmitting device, the position of the transmitting coil is automatically adjusted, such that a geometric center of the transmitting coil coincides with or approaches that of the receiving coil as far as possible. In this way, the charging efficiency of the power receiving device is improved.

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features can be described above as acting in certain combinations and even initially claimed as such, one or more features from a claimed combination can in some cases be excised from the combination, and the claimed combination can be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

The above description includes part of embodiments of the present disclosure, and not limits the present disclosure. Any modifications, equivalent substitutions, improvements, etc., within principles of the present disclosure, are included in the scope of protection of the present disclosure.

It is apparent that those of ordinary skill in the art can make various modifications and variations to the embodiments of the disclosure without departing from the scope of the disclosure. Thus, it is intended that the present disclosure cover the modifications and the modifications.

Various embodiments in this specification have been described in a progressive manner, where descriptions of some embodiments focus on the differences from other embodiments, and same or similar parts among the different embodiments are sometimes described together in only one embodiment.

It should also be noted that in the present disclosure, relational terms such as first and second, etc., are only used to distinguish one entity or operation from another entity or operation, and do not necessarily require or imply these entities having such an order or sequence. It does not necessarily require or imply that any such actual relationship or order exists between these entities or operations.

Moreover, the terms "include," "including," or any other variations thereof are intended to cover a non-exclusive inclusion within a process, method, article, or apparatus that comprises a list of elements including not only those elements but also those that are not explicitly listed, or other elements that are inherent to such processes, methods, goods, or equipment.

In the case of no more limitation, the element defined by the sentence "includes a..." does not exclude the existence of another identical element in the process, the method, or the device including the element.

Specific examples are used herein to describe the principles and implementations of some embodiments. The description is only used to help convey understanding of the possible methods and concepts. Meanwhile, those of ordinary skill in the art can change the specific manners of implementation and application thereof without departing from the scope of the disclosure. The contents of this specification therefore should not be construed as limiting the disclosure.

For example, in the description of the present disclosure, the terms "some embodiments," or "example," and the like may indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, materials, or characteristics described can be combined in a suitable manner in any one or more embodiments or examples. In addition, various embodiments or examples described in the specification, as well as features of various embodiments or examples, can be combined and reorganized.

In the descriptions, with respect to circuit(s), unit(s), device(s), component(s), etc., in some occurrences singular forms are used, and in some other occurrences plural forms are used in the descriptions of various embodiments. It should be noted; however, the single or plural forms are not limiting but rather are for illustrative purposes. Unless it is expressly stated that a single unit, device, or component etc. is employed, or it is expressly stated that a plurality of units, devices or components, etc. are employed, the circuit(s), unit(s), device(s), component(s), etc. can be singular, or plural.

Based on various embodiments of the present disclosure, the disclosed apparatuses, devices, and methods can be implemented in other manners. For example, the abovementioned devices can employ various methods of use or implementation as disclosed herein.

In the present disclosure, the terms "installed," "connected," "coupled," "fixed" and the like shall be understood broadly, and may be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in the present disclosure can be understood by those of ordinary skill in the art on a case-by-case basis.

Dividing the device into different "regions," "units," "components" or "layers," etc. merely reflect various logical functions according to some embodiments, and actual implementations can have other divisions of "regions," "units," "components" or "layers," etc. realizing similar functions as described above, or without divisions. For example, multiple regions, units, or layers, etc. can be combined or can be integrated into another system. In addition, some features can be omitted, and some steps in the methods can be skipped.

Those of ordinary skill in the art will appreciate that the units, components, regions, or layers, etc. in the devices provided by various embodiments described above can be provided in the one or more devices described above. They can also be located in one or multiple devices that is (are) different from the example embodiments described above or illustrated in the accompanying drawings. For example, the units, regions, or layers, etc. in various embodiments described above can be integrated into one module or divided into several sub-modules.

The various device components, modules, units, blocks, or portions may have modular configurations, or are composed of discrete components, but nonetheless can be referred to as "modules" in general. In other words, the "components," "modules," "blocks," "portions," or "units" referred to herein may or may not be in modular forms.

Moreover, the terms "first" and "second" are used for descriptive purposes only and are not to be construed as indicating or implying a relative importance or implicitly indicating the number of technical features indicated. Thus, elements referred to as " first" and "second" may include one or more of the features either explicitly or implicitly. In the description of the present disclosure, "a plurality" indicates two or more unless specifically defined otherwise.

The order of the various embodiments described above are only for the purpose of illustration, and do not represent preference of embodiments.

Although specific embodiments have been described above in detail, the description is merely for purposes of illustration. It should be appreciated, therefore, that many aspects described above are not intended as required or essential elements unless explicitly stated otherwise.

Various modifications of, and equivalent acts corresponding to the disclosed aspects of the exemplary embodiments can be made in addition to those described above by a person of ordinary skill in the art having the benefit of the present disclosure without departing from the scope of the disclosure contemplated by this disclosure and as defined in the following claims. As such, the scope of this disclosure is to be accorded the broadest reasonable interpretation so as to encompass such modifications and equivalent structures.

## Claims

1. A method for adjusting a coil position, applied to a power transmitting device (10), the method comprising:
acquiring (201) position offset indication information between a transmitting coil in the power transmitting device (10) and a receiving coil in a power receiving device (20); wherein the power transmitting device (10) is configured to wirelessly charge the power receiving device (20), and the position offset indication information is used to reflect a position offset between the transmitting coil and the receiving coil; **characterised in**
adjusting (202) a position of the transmitting coil by a power device according to the position offset indication information, wherein the power device comprises electromagnets in the power transmitting device (10) and magnetic materials on positions of the transmitting coil corresponding to the electromagnets.

2. The method according to claim 1, wherein the position offset indication information comprises charging efficiency indication information and the charging efficiency indication information is used to indicate a charging efficiency of the wireless charging; and adjusting (202) the position of the transmitting coil according to the position offset indication information comprises:
detecting whether the charging efficiency indication information satisfies a first predetermined condition;
adjusting the position of the transmitting coil if the charging efficiency indication information satisfies the first predetermined condition; and
after the adjustment of the position of the transmitting coil, re-acquiring the charging efficiency indication information, re-performing the step of detecting whether the charging efficiency indication information satisfies the first predetermined condition until the charging efficiency indication information does not satisfy the first predetermined condition, and stopping adjusting the position of the transmitting coil;
wherein the acquiring (201) the position offset indication information between the transmitting coil in the power transmitting device (10) and the receiving coil in the power receiving device (20) comprises:
acquiring a transmitted power of the power transmitting device (10) and a received power of the power receiving device (20);
calculating a charging efficiency according to the transmitted power and the received power; and
determining the charging efficiency indication information according to the charging efficiency.

3. The method according to claim 2, wherein the position offset indication information comprises charging temperature indication information, the charging temperature indication information is used to indicate a temperature of the power transmitting device (10); and the method further comprises:
detecting whether the charging temperature indication information satisfies a second predetermined condition;
adjusting the position of the transmitting coil if the charging temperature indication information satisfies the second predetermined condition; and after the adjustment of the position of the transmitting coil, re-acquiring the charging temperature indication information, re-performing the step of detecting whether the charging temperature indication information satisfies the second predetermined condition until the charging efficiency indication information does not satisfy the first predetermined condition and the charging temperature indication information does not satisfy the second predetermined condition, and stopping adjusting the position of the transmitting coil.

4. The method according to claim 1, wherein the acquiring (201) the position offset indication information between the transmitting coil in the power transmitting device (10) and the receiving coil in the power receiving device (20) comprises:
receiving a position adjustment parameter transmitted from the power receiving device (20), wherein the position adjustment parameter is used to indicate an adjustment direction and an adjustment distance of the transmitting coil.

5. A method for adjusting a coil position, applied to a power system comprising a power transmitting device (10) and a power receiving device (20), the method comprising:
determining (501), by a magnetic induction sensor, a position of a transmitting coil in a power transmitting device (10) configured to wirelessly charge the power receiving device (20);
determining (502) a position adjustment parameter of the transmitting coil according to a position of a receiving coil in the power receiving device (20) and the position of the transmitting coil, wherein the position adjustment parameter is used to indicate an adjustment direction and an adjustment distance of the transmitting coil;
transmitting (503) the position adjustment parameter to the power transmitting device (10); **characterised in**
adjusting, by the power transmitting device (10), a position of the transmitting coil by using a power device according to the position offset indication information, wherein the power device comprises electromagnets in the power transmitting device (10) and magnetic materials on positions of the transmitting coil corresponding to the electromagnets.

6. The method according to claim 5, wherein the determining (501), by the magnetic induction sensor, the position of the transmitting coil in the power transmitting device (10) configured to wirelessly charge the power receiving device (20) comprises:
acquiring a magnetic field parameter of a magnet arranged in the power transmitting device (10) by the magnetic induction sensor, wherein a central position of the magnet is aligned with a central position of the transmitting coil; and
determining the position of the transmitting coil according to the magnetic field parameter of the magnet; and
wherein the determining the position of the transmitting coil according to the magnetic field parameter of the magnet comprises:
determining a magnetic field component in a horizontal direction of the magnet according to the magnetic field parameter of the magnet, the magnetic field parameter of the magnet comprising a magnetic field direction and a magnetic field magnitude; and
determining the position of the transmitting coil according to the magnetic field component and a first mapping relationship, wherein the first mapping relationship is used to describe a mapping relationship between the magnetic field component and the position of the transmitting coil.

7. The method according to claim 5, wherein determining (501), by the magnetic induction sensor, the position of the transmitting coil in the power transmitting device (10) configured to wirelessly charge the power receiving device (20) comprises:
acquiring a magnetic field parameter of the transmitting coil by a magnetic induction sensor; and
determining the position of the transmitting coil according to the magnetic field parameter of the transmitting coil; and
wherein the acquiring the magnetic field parameter of the transmitting coil by the magnetic induction sensor comprises:
collecting a magnetic field parameter of a first magnetic field of the transmitting coil by the magnetic induction sensor according to a first sampling frequency, the first magnetic field being a magnetic field generated by the transmitting coil for wireless charging; and determining the magnetic field parameter of the transmitting coil according to the magnetic field parameter of the first magnetic field acquired by sampling; or
collecting a magnetic field parameter of a second magnetic field of the transmitting coil by the magnetic induction sensor according to a second sampling frequency, the second magnetic field being another magnetic field generated by the transmitting coil in addition to the magnetic field for wireless charging; and determining the magnetic field parameter of the transmitting coil according to the magnetic field parameter of the second magnetic field acquired by sampling.

8. The method according to claim 7, wherein determining the position of the transmitting coil according to the magnetic field parameter of the transmitting coil comprises:
determining a magnetic field component in a horizontal direction of the transmitting coil according to the magnetic field parameter of the transmitting coil, the magnetic field parameter of the transmitting coil comprising a magnetic field direction and a magnetic field magnitude; and
determining the position of the transmitting coil according to the magnetic field component and a second mapping relationship, the second mapping relationship being used to describe a mapping relationship between the magnetic field component and the position of the transmitting coil.

9. An apparatus for adjusting a coil position applied to a power transmitting device (10), the apparatus comprising:
an information acquiring module (810), configured to acquire position offset indication information between a transmitting coil in the power transmitting device (10) and a receiving coil in a power receiving device (20); wherein the power transmitting device (10) is configured to wirelessly charge the power receiving device (20), and the position offset indication information is used to reflect a position offset between the transmitting coil and the receiving coil; **characterised in**
a position adjusting module (820), configured to adjust a position of the transmitting coil according to the position offset indication information by a power device, wherein the power device comprises electromagnets in the power transmitting device (10) and magnetic materials on positions of the transmitting coil corresponding to the electromagnets.

10. The apparatus according to claim 9, wherein the position offset indication information comprises charging efficiency indication information and the charging efficiency indication information is used to indicate a charging efficiency of the wireless charging;
the position adjusting module (820) comprises:
a condition detecting unit (821), configured to detect whether the charging efficiency indication information satisfies a first predetermined condition;
a position adjusting unit (822), configured to adjust the position of the transmitting coil if the charging efficiency indication information satisfies the first predetermined condition; and
an information acquiring unit (823), configured to, after the adjustment of the position of the transmitting coil, re-acquire the charging efficiency indication information, detect whether the charging efficiency indication information satisfies the first predetermined condition by the condition detecting unit (821) again until the charging efficiency indication information does not satisfy the first predetermined condition, and stop adjusting the position of the transmitting coil;
wherein the information acquiring module (810) is further configured to:
acquire a transmitted power of the power transmitting device (10) and a received power of the power receiving device (20);
calculate a charging efficiency according to the transmitted power and the received power; and
determine the charging efficiency indication information according to the charging efficiency.

11. The apparatus according to claim 10, wherein the position offset indication information further comprises charging temperature indication information and the charging temperature indication information is used to indicate a temperature of the power transmitting device (10);
the condition detecting unit (821) is further configured to detect whether the charging temperature indication information satisfies a second predetermined condition;
the position adjusting unit (822) is further configured to adjust the position of the transmitting coil if the charging temperature indication information satisfies the second predetermined condition; and
the information acquiring unit (823) is further configured to, after the adjustment of the position of the transmitting coil, re-acquire the charging temperature indication information, detect whether the charging temperature indication information satisfies the second predetermined condition by the condition detecting unit again until the charging efficiency indication information does not satisfy the first predetermined condition and the charging temperature indication information does not satisfy the second predetermined condition, and stop adjusting the position of the transmitting coil.

12. The apparatus according to claim 9, wherein the information acquiring module (810) is further configured to:
receive a position adjustment parameter transmitted from the power receiving device (20), the position adjustment parameter being used to indicate an adjustment direction and an adjustment distance of the transmitting coil.

13. A system for adjusting a coil position applied to a power transmitting device (10) and a power receiving device (20), the system comprising:
a position determining module (1010), configured to determine, by a magnetic induction sensor, a position of a transmitting coil in a power transmitting device (10) configured to wirelessly charge the power receiving device (20);
a parameter determining module (1020), configured to determine a position adjustment parameter of the transmitting coil according to a position of a receiving coil in the power receiving device (20) and the position of the transmitting coil, wherein the position adjustment parameter is used to indicate an adjustment direction and an adjustment distance of the transmitting coil;
a parameter transmitting module (1030), configured to transmit the position adjustment parameter to the power transmitting device (10); **characterised in**
adjusting, by the power transmitting device (10), a position of the transmitting coil by using a power device according to the position offset indication information, wherein the power device comprises electromagnets in the power transmitting device (10) and magnetic materials on positions of the transmitting coil corresponding to the electromagnets.

14. The system according to claim 13, wherein the position determining module (1010) comprises:
a parameter acquiring unit (1011), configured to acquire a magnetic field parameter of a magnet arranged in the power transmitting device (10) by the magnetic induction sensor, wherein a central position of the magnet is aligned with a central position of the transmitting coil; and
a position determining unit (1012), configured to determine the position of the transmitting coil according to the magnetic field parameter of the magnet; and
wherein the position determining unit (1012) is configured to:
determine a magnetic field component in a horizontal direction of the magnet according to the magnetic field parameter of the magnet, the magnetic field parameter comprising a magnetic field direction and a magnetic field magnitude; and
determine the position of the transmitting coil according to the magnetic field component and a first mapping relationship, the first mapping relationship being used to describe a mapping relationship between the magnetic field component and the position of the transmitting coil.

15. The system according to claim 13, wherein the position determining module (1010) comprises:
a parameter acquiring unit (1011), configured to acquire a magnetic field parameter of the transmitting coil by a magnetic induction sensor; and
a position determining unit (1012), configured to determine the position of the transmitting coil according to the magnetic field parameter of the transmitting coil; and
wherein the parameter acquiring unit (1011) is configured to:
collect a magnetic field parameter of a first magnetic field of the transmitting coil by the magnetic induction sensor according to a first sampling frequency, the first magnetic field being a magnetic field generated by the transmitting coil for wireless charging; and determine the magnetic field parameter of the transmitting coil according to the magnetic field parameter of the first magnetic field acquired by sampling;
or
collect a magnetic field parameter of a second magnetic field of the transmitting coil by the magnetic induction sensor according to a second sampling frequency, the second magnetic field being another magnetic field generated by the transmitting coil in addition to the magnetic field for wireless charging; and determine the magnetic field parameter of the transmitting coil according to the magnetic field parameter of the second magnetic field acquired by sampling.

16. The system according to claim 15, wherein the position determining unit (1012) is further configured to:
determine a magnetic field component in a horizontal direction of the transmitting coil according to the magnetic field parameter of the transmitting coil, the magnetic field parameter of the transmitting coil comprising a magnetic field direction and a magnetic field magnitude; and
determine the position of the transmitting coil according to the magnetic field component and a second mapping relationship, the second mapping relations hip being used to describe a mapping relationship between the magnetic field component and the position of the transmitting coil.

## Patentansprüche

1. Verfahren zum Anpassen einer Spulenposition, angewendet auf eine Leistungsübertragungsvorrichtung (10), wobei das Verfahren umfasst:
Erfassen (201) von Positionsversatz-Anzeigeinformationen zwischen einer Sendespule in der Leistungsübertragungsvorrichtung (10) und einer Empfangsspule in einer Leistungsempfangsvorrichtung (20); wobei die Leistungsübertragungsvorrichtung (10) dazu ausgelegt ist, die Leistungsempfangsvorrichtung (20) drahtlos zu laden, und die Positionsversatz-Anzeigeinformationen dazu dienen, einen Positionsversatz zwischen der Sendespule und der Empfangsspule widerzuspiegeln;
**gekennzeichnet durch**
Anpassen (202) einer Position der Sendespule durch eine Leistungsvorrichtung gemäß den Positionsversatz-Anzeigeinformationen, wobei die Leistungsvorrichtung Elektromagnete in der Leistungsübertragungsvorrichtung (10) und magnetische Materialien an Positionen der Sendespule umfasst, die den Elektromagneten entsprechen.

2. Verfahren nach Anspruch 1, wobei die Positionsversatz-Anzeigeinformationen Ladeeffizienz-Anzeigeinformationen umfassen und die Ladeeffizienz-Anzeigeinformationen dazu dienen, eine Ladeeffizienz des drahtlosen Ladens anzuzeigen; und das Anpassen (202) der Position der Sendespule gemäß den Positionsversatz-Anzeigeinformationen umfasst:
Erfassen, ob die Ladeeffizienz-Anzeigeinformationen eine erste vorbestimmte Bedingung erfüllen;
Anpassen der Position der Sendespule, wenn die Ladeeffizienz-Anzeigeinformationen die erste vorbestimmte Bedingung erfüllen; und
nach dem Anpassen der Position der Sendespule, erneutes Erfassen der Ladeeffizienz-Anzeigeinformationen, erneutes Durchführen des Schritts des Erfassens, ob die Ladeeffizienz-Anzeigeinformationen die erste vorbestimmte Bedingung erfüllen, bis die Ladeeffizienz-Anzeigeinformationen die erste vorbestimmte Bedingung nicht mehr erfüllen, und Beenden des Anpassens der Position der Sendespule;
wobei das Erfassen (201) der Positionsversatz-Anzeigeinformationen zwischen der Sendespule in der Leistungsübertragungsvorrichtung (10) und der Empfangsspule in der Leistungsempfangsvorrichtung (20) umfasst:
Erfassen einer übertragenen Leistung der Leistungsübertragungsvorrichtung (10) und einer empfangenen Leistung der Leistungsempfangsvorrichtung (20);
Berechnen einer Ladeeffizienz anhand der übertragenen Leistung und der empfangenen Leistung; und
Bestimmen der Ladeeffizienz-Anzeigeinformationen anhand der Ladeeffizienz.

3. Verfahren nach Anspruch 2, wobei die Positionsversatz-Anzeigeinformationen Lade-Temperatur-Anzeigeinformationen umfassen, die Lade-Temperatur-Anzeigeinformationen dazu dienen, eine Temperatur der Leistungsübertragungsvorrichtung (10) anzuzeigen; und das Verfahren ferner umfasst:
Erfassen, ob die Lade-Temperatur-Anzeigeinformationen eine zweite vorbestimmte Bedingung erfüllen;
Anpassen der Position der Sendespule, wenn die Lade-Temperatur-Anzeigeinformationen die zweite vorbestimmte Bedingung erfüllen; und
nach dem Anpassen der Position der Sendespule, erneutes Erfassen der Lade-Temperatur-Anzeigeinformationen, erneutes Durchführen des Schritts des Erfassens, ob die Lade-Temperatur-Anzeigeinformationen die zweite vorbestimmte Bedingung erfüllen, bis die Ladeeffizienz-Anzeigeinformationen die erste vorbestimmte Bedingung nicht mehr erfüllen und die Lade-Temperatur-Anzeigeinformationen die zweite vorbestimmte Bedingung nicht mehr erfüllen, und Beenden des Anpassens der Position der Sendespule.

4. Verfahren nach Anspruch 1, wobei das Erfassen (201) der Positionsversatz-Anzeigeinformationen zwischen der Sendespule in der Leistungsübertragungsvorrichtung (10) und der Empfangsspule in der Leistungsempfangsvorrichtung (20) umfasst:
Empfangen eines Positionsanpassungsparameters, der von der Leistungsempfangsvorrichtung (20) übertragen wird, wobei der Positionsanpassungsparameter dazu dient, eine Anpassungsrichtung und eine Anpassungsdistanz der Sendespule anzuzeigen.

5. Verfahren zum Anpassen einer Spulenposition, angewendet auf ein Leistungssystem, das eine Leistungsübertragungsvorrichtung (10) und eine Leistungsempfangsvorrichtung (20) umfasst, wobei das Verfahren umfasst:
Bestimmen (501) einer Position einer Sendespule in einer Leistungsübertragungsvorrichtung (10) durch einen magnetischen Induktionssensor, wobei die Leistungsübertragungsvorrichtung (10) dazu ausgelegt ist, die Leistungsempfangsvorrichtung (20) drahtlos zu laden;
Bestimmen (502) eines Positionsanpassungsparameters der Sendespule anhand einer Position einer Empfangsspule in der Leistungsempfangsvorrichtung (20) und der Position der Sendespule, wobei der Positionsanpassungsparameter dazu dient, eine Anpassungsrichtung und eine Anpassungsdistanz der Sendespule anzuzeigen;
Übertragen (503) des Positionsanpassungsparameters an die Leistungsübertragungsvorrichtung (10);
**gekennzeichnet durch**
Anpassen der Position der Sendespule durch die Leistungsübertragungsvorrichtung (10) unter Verwendung einer Leistungsvorrichtung gemäß den Positionsversatz-Anzeigeinformationen, wobei die Leistungsvorrichtung Elektromagnete in der Leistungsübertragungsvorrichtung (10) und magnetische Materialien an Positionen der Sendespule umfasst, die den Elektromagneten entsprechen.

6. Verfahren nach Anspruch 5, wobei das Bestimmen (501) der Position der Sendespule in der Leistungsübertragungsvorrichtung (10) durch den magnetischen Induktionssensor umfasst:
Erfassen eines Magnetfeldparameters eines in der Leistungsübertragungsvorrichtung (10) angeordneten Magneten durch den magnetischen Induktionssensor, wobei eine Mittelposition des Magneten mit einer Mittelposition der Sendespule ausgerichtet ist; und
Bestimmen der Position der Sendespule anhand des Magnetfeldparameters des Magneten;
wobei das Bestimmen der Position der Sendespule anhand des Magnetfeldparameters des Magneten umfasst:
Bestimmen einer Magnetfeldkomponente in einer horizontalen Richtung des Magneten anhand des Magnetfeldparameters des Magneten, wobei der Magnetfeldparameter des Magneten eine Magnetfeldrichtung und eine Magnetfeldstärke umfasst; und
Bestimmen der Position der Sendespule anhand der Magnetfeldkomponente und einer ersten Abbildungsbeziehung, wobei die erste Abbildungsbeziehung dazu dient, eine Abbildungsbeziehung zwischen der Magnetfeldkomponente und der Position der Sendespule zu beschreiben.

7. Verfahren nach Anspruch 5, wobei das Bestimmen (501) der Position der Sendespule in der Leistungsübertragungsvorrichtung (10) durch den magnetischen Induktionssensor umfasst:
Erfassen eines Magnetfeldparameters der Sendespule durch einen magnetischen Induktionssensor; und
Bestimmen der Position der Sendespule anhand des Magnetfeldparameters der Sendespule;
wobei das Erfassen des Magnetfeldparameters der Sendespule durch den magnetischen Induktionssensor umfasst:
Sammeln eines Magnetfeldparameters eines ersten Magnetfeldes der Sendespule durch den magnetischen Induktionssensor gemäß einer ersten Abtastfrequenz, wobei das erste Magnetfeld ein von der Sendespule für das drahtlose Laden erzeugtes Magnetfeld ist; und Bestimmen des Magnetfeldparameters der Sendespule anhand des durch Abtastung erfassten Magnetfeldparameters des ersten Magnetfeldes; oder
Sammeln eines Magnetfeldparameters eines zweiten Magnetfeldes der Sendespule durch den magnetischen Induktionssensor gemäß einer zweiten Abtastfrequenz, wobei das zweite Magnetfeld ein weiteres von der Sendespule zusätzlich zum Magnetfeld für das drahtlose Laden erzeugtes Magnetfeld ist; und Bestimmen des Magnetfeldparameters der Sendespule anhand des durch Abtastung erfassten Magnetfeldparameters des zweiten Magnetfeldes.

8. Verfahren nach Anspruch 7, wobei das Bestimmen der Position der Sendespule anhand des Magnetfeldparameters der Sendespule umfasst:
Bestimmen einer Magnetfeldkomponente in einer horizontalen Richtung der Sendespule anhand des Magnetfeldparameters der Sendespule, wobei der Magnetfeldparameter der Sendespule eine Magnetfeldrichtung und eine Magnetfeldstärke umfasst; und
Bestimmen der Position der Sendespule anhand der Magnetfeldkomponente und einer zweiten Abbildungsbeziehung, wobei die zweite Abbildungsbeziehung dazu dient, eine Abbildungsbeziehung zwischen der Magnetfeldkomponente und der Position der Sendespule zu beschreiben.

9. Vorrichtung zum Anpassen einer Spulenposition, angewendet auf eine Leistungsübertragungsvorrichtung (10), wobei die Vorrichtung umfasst:
ein Informationserfassungsmodul (810), das dazu ausgelegt ist, Positionsversatz-Anzeigeinformationen zwischen einer Sendespule in der Leistungsübertragungsvorrichtung (10) und einer Empfangsspule in einer Leistungsempfangsvorrichtung (20) zu erfassen; wobei die Leistungsübertragungsvorrichtung (10) dazu ausgelegt ist, die Leistungsempfangsvorrichtung (20) drahtlos zu laden, und die Positionsversatz-Anzeigeinformationen dazu dienen, einen Positionsversatz zwischen der Sendespule und der Empfangsspule widerzuspiegeln;
**gekennzeichnet durch**
ein Positionsanpassungsmodul (820), das dazu ausgelegt ist, eine Position der Sendespule gemäß den Positionsversatz-Anzeigeinformationen durch eine Leistungsvorrichtung anzupassen, wobei die Leistungsvorrichtung Elektromagnete in der Leistungsübertragungsvorrichtung (10) und magnetische Materialien an Positionen der Sendespule umfasst, die den Elektromagneten entsprechen.

10. Vorrichtung nach Anspruch 9, wobei die Positionsversatz-Anzeigeinformationen Ladeeffizienz-Anzeigeinformationen umfassen und die Ladeeffizienz-Anzeigeinformationen dazu dienen, eine Ladeeffizienz des drahtlosen Ladens anzuzeigen;
das Positionsanpassungsmodul (820) umfasst:
eine Bedingungserfassungseinheit (821), die dazu ausgelegt ist, zu erfassen, ob die Ladeeffizienz-Anzeigeinformationen eine erste vorbestimmte Bedingung erfüllen;
eine Positionsanpassungseinheit (822), die dazu ausgelegt ist, die Position der Sendespule anzupassen, wenn die Ladeeffizienz-Anzeigeinformationen die erste vorbestimmte Bedingung erfüllen; und
eine Informationserfassungseinheit (823), die dazu ausgelegt ist, nach dem Anpassen der Position der Sendespule die Ladeeffizienz-Anzeigeinformationen erneut zu erfassen, durch die Bedingungserfassungseinheit (821) erneut zu erfassen, ob die Ladeeffizienz-Anzeigeinformationen die erste vorbestimmte Bedingung erfüllen, bis die Ladeeffizienz-Anzeigeinformationen die erste vorbestimmte Bedingung nicht mehr erfüllen, und das Anpassen der Position der Sendespule zu beenden;
wobei das Informationserfassungsmodul (810) weiterhin dazu ausgelegt ist:
eine übertragene Leistung der Leistungsübertragungsvorrichtung (10) und eine empfangene Leistung der Leistungsempfangsvorrichtung (20) zu erfassen;
eine Ladeeffizienz anhand der übertragenen Leistung und der empfangenen Leistung zu berechnen; und
die Ladeeffizienz-Anzeigeinformationen anhand der Ladeeffizienz zu bestimmen.

11. Vorrichtung nach Anspruch 10, wobei die Positionsversatz-Anzeigeinformationen weiterhin Lade-Temperatur-Anzeigeinformationen umfassen und die Lade-Temperatur-Anzeigeinformationen dazu dienen, eine Temperatur der Leistungsübertragungsvorrichtung (10) anzuzeigen;
die Bedingungserfassungseinheit (821) ist weiterhin dazu ausgelegt, zu erfassen, ob die Lade-Temperatur-Anzeigeinformationen eine zweite vorbestimmte Bedingung erfüllen;
die Positionsanpassungseinheit (822) ist weiterhin dazu ausgelegt, die Position der Sendespule anzupassen, wenn die Lade-Temperatur-Anzeigeinformationen die zweite vorbestimmte Bedingung erfüllen; und
die Informationserfassungseinheit (823) ist weiterhin dazu ausgelegt, nach dem Anpassen der Position der Sendespule die Lade-Temperatur-Anzeigeinformationen erneut zu erfassen, durch die Bedingungserfassungseinheit erneut zu erfassen, ob die Lade-Temperatur-Anzeigeinformationen die zweite vorbestimmte Bedingung erfüllen, bis die Ladeeffizienz-Anzeigeinformationen die erste vorbestimmte Bedingung nicht mehr erfüllen und die Lade-Temperatur-Anzeigeinformationen die zweite vorbestimmte Bedingung nicht mehr erfüllen, und das Anpassen der Position der Sendespule zu beenden.

12. Vorrichtung nach Anspruch 9, wobei das Informationserfassungsmodul (810) weiterhin dazu ausgelegt ist:
einen von der Leistungsempfangsvorrichtung (20) übertragenen Positionsanpassungsparameter zu empfangen, wobei der Positionsanpassungsparameter dazu dient, eine Anpassungsrichtung und eine Anpassungsdistanz der Sendespule anzuzeigen.

13. System zum Anpassen einer Spulenposition, angewendet auf eine Leistungsübertragungsvorrichtung (10) und eine Leistungsempfangsvorrichtung (20), wobei das System umfasst:
ein Positionsbestimmungsmodul (1010), das dazu ausgelegt ist, durch einen magnetischen Induktionssensor eine Position einer Sendespule in einer Leistungsübertragungsvorrichtung (10) zu bestimmen, die dazu ausgelegt ist, die Leistungsempfangsvorrichtung (20) drahtlos zu laden;
ein Parameterbestimmungsmodul (1020), das dazu ausgelegt ist, einen Positionsanpassungsparameter der Sendespule anhand einer Position einer Empfangsspule in der Leistungsempfangsvorrichtung (20) und der Position der Sendespule zu bestimmen, wobei der Positionsanpassungsparameter dazu dient, eine Anpassungsrichtung und eine Anpassungsdistanz der Sendespule anzuzeigen;
ein Parameterübertragungsmodul (1030), das dazu ausgelegt ist, den Positionsanpassungsparameter an die Leistungsübertragungsvorrichtung (10) zu übertragen;
**dadurch gekennzeichnet, dass**
die Leistungsübertragungsvorrichtung (10) die Position der Sendespule unter Verwendung einer Leistungsvorrichtung gemäß den Positionsversatz-Anzeigeinformationen anpasst, wobei die Leistungsvorrichtung Elektromagnete in der Leistungsübertragungsvorrichtung (10) und magnetische Materialien an Positionen der Sendespule umfasst, die den Elektromagneten entsprechen.

14. System nach Anspruch 13, wobei das Positionsbestimmungsmodul (1010) umfasst:
eine Parametererfassungseinheit (1011), die dazu ausgelegt ist, einen Magnetfeldparameter eines in der Leistungsübertragungsvorrichtung (10) angeordneten Magneten durch den magnetischen Induktionssensor zu erfassen, wobei eine Mittelposition des Magneten mit einer Mittelposition der Sendespule ausgerichtet ist; und
eine Positionsbestimmungseinheit (1012), die dazu ausgelegt ist, die Position der Sendespule anhand des Magnetfeldparameters des Magneten zu bestimmen;
wobei die Positionsbestimmungseinheit (1012) dazu ausgelegt ist:
eine Magnetfeldkomponente in einer horizontalen Richtung des Magneten anhand des Magnetfeldparameters des Magneten zu bestimmen, wobei der Magnetfeldparameter eine Magnetfeldrichtung und eine Magnetfeldstärke umfasst; und
die Position der Sendespule anhand der Magnetfeldkomponente und einer ersten Abbildungsbeziehung zu bestimmen, wobei die erste Abbildungsbeziehung dazu dient, eine Abbildungsbeziehung zwischen der Magnetfeldkomponente und der Position der Sendespule zu beschreiben.

15. System nach Anspruch 13, wobei das Positionsbestimmungsmodul (1010) umfasst:
eine Parametererfassungseinheit (1011), die dazu ausgelegt ist, einen Magnetfeldparameter der Sendespule durch einen magnetischen Induktionssensor zu erfassen; und
eine Positionsbestimmungseinheit (1012), die dazu ausgelegt ist, die Position der Sendespule anhand des Magnetfeldparameters der Sendespule zu bestimmen;
wobei die Parametererfassungseinheit (1011) dazu ausgelegt ist:
einen Magnetfeldparameter eines ersten Magnetfeldes der Sendespule durch den magnetischen Induktionssensor gemäß einer ersten Abtastfrequenz zu sammeln, wobei das erste Magnetfeld ein von der Sendespule für das drahtlose Laden erzeugtes Magnetfeld ist; und den Magnetfeldparameter der Sendespule anhand des durch Abtastung erfassten Magnetfeldparameters des ersten Magnetfeldes zu bestimmen; oder
einen Magnetfeldparameter eines zweiten Magnetfeldes der Sendespule durch den magnetischen Induktionssensor gemäß einer zweiten Abtastfrequenz zu sammeln, wobei das zweite Magnetfeld ein weiteres von der Sendespule zusätzlich zum Magnetfeld für das drahtlose Laden erzeugtes Magnetfeld ist; und den Magnetfeldparameter der Sendespule anhand des durch Abtastung erfassten Magnetfeldparameters des zweiten Magnetfeldes zu bestimmen.

16. System nach Anspruch 15, wobei die Positionsbestimmungseinheit (1012) weiterhin dazu ausgelegt ist:
eine Magnetfeldkomponente in einer horizontalen Richtung der Sendespule anhand des Magnetfeldparameters der Sendespule zu bestimmen, wobei der Magnetfeldparameter der Sendespule eine Magnetfeldrichtung und eine Magnetfeldstärke umfasst; und
die Position der Sendespule anhand der Magnetfeldkomponente und einer zweiten Abbildungsbeziehung zu bestimmen, wobei die zweite Abbildungsbeziehung dazu dient, eine Abbildungsbeziehung zwischen der Magnetfeldkomponente und der Position der Sendespule zu beschreiben.

## Revendications

1. Procédé de réglage d'une position de bobine, appliqué à un dispositif de transmission d'énergie (10), le procédé comprenant:
l'acquisition (201) d'informations d'indication de décalage de position entre une bobine émettrice dans le dispositif de transmission d'énergie (10) et une bobine réceptrice dans un dispositif de réception d'énergie (20);
dans lequel le dispositif de transmission d'énergie (10) est configuré pour charger sans fil le dispositif de réception d'énergie (20), et les informations d'indication de décalage de position sont utilisées pour refléter un décalage de position entre la bobine émettrice et la bobine réceptrice;
**caractérisé par** le réglage (202) d'une position de la bobine émettrice par un dispositif d'entraînement en fonction des informations d'indication de décalage de position,
dans lequel le dispositif d'entraînement comprend des électroaimants dans le dispositif de transmission d'énergie (10) et des matériaux magnétiques sur des positions de la bobine émettrice correspondant aux électroaimants.

2. Procédé selon la revendication 1, dans lequel les informations d'indication de décalage de position comprennent des informations d'indication d'efficacité de charge, et les informations d'indication d'efficacité de charge sont utilisées pour indiquer une efficacité de charge de la charge sans fil ;
et le réglage (202) de la position de la bobine émettrice en fonction des informations d'indication de décalage de position comprend :
la détection si les informations d'indication d'efficacité de charge satisfont une première condition prédéterminée ;
le réglage de la position de la bobine émettrice si les informations d'indication d'efficacité de charge satisfont la première condition prédéterminée ;
après le réglage de la position de la bobine émettrice, la réacquisition des informations d'indication d'efficacité de charge, la réexécution de l'étape de détection si les informations d'indication d'efficacité de charge satisfont la première condition prédéterminée jusqu'à ce que les informations d'indication d'efficacité de charge ne satisfassent plus la première condition prédéterminée, puis l'arrêt du réglage de la position de la bobine émettrice ;
dans lequel l'acquisition (201) des informations d'indication de décalage de position entre la bobine émettrice dans le dispositif de transmission d'énergie (10) et la bobine réceptrice dans le dispositif de réception d'énergie (20) comprend :
l'acquisition d'une puissance émise du dispositif de transmission d'énergie (10) et d'une puissance reçue du dispositif de réception d'énergie (20) ;
le calcul d'une efficacité de charge en fonction de la puissance émise et de la puissance reçue;
la détermination des informations d'indication d'efficacité de charge en fonction de l'efficacité de charge.

3. Procédé selon la revendication 2, dans lequel les informations d'indication de décalage de position comprennent des informations d'indication de température de charge, les informations d'indication de température de charge étant utilisées pour indiquer une température du dispositif de transmission d'énergie (10) ;
et le procédé comprend en outre :
la détection si les informations d'indication de température de charge satisfont une deuxième condition prédéterminée ;
le réglage de la position de la bobine émettrice si les informations d'indication de température de charge satisfont la deuxième condition prédéterminée ;
après le réglage de la position de la bobine émettrice, la réacquisition des informations d'indication de température de charge, la réexécution de l'étape de détection si les informations d'indication de température de charge satisfont la deuxième condition prédéterminée jusqu'à ce que les informations d'indication d'efficacité de charge ne satisfassent plus la première condition prédéterminée et que les informations d'indication de température de charge ne satisfassent plus la deuxième condition prédéterminée, puis l'arrêt du réglage de la position de la bobine émettrice.

4. Procédé selon la revendication 1, dans lequel l'acquisition (201) des informations d'indication de décalage de position entre la bobine émettrice dans le dispositif de transmission d'énergie (10) et la bobine réceptrice dans le dispositif de réception d'énergie (20) comprend :
la réception d'un paramètre de réglage de position transmis depuis le dispositif de réception d'énergie (20), dans lequel le paramètre de réglage de position est utilisé pour indiquer une direction de réglage et une distance de réglage de la bobine émettrice.

5. Procédé de réglage d'une position de bobine, appliqué à un système d'énergie comprenant un dispositif de transmission d'énergie (10) et un dispositif de réception d'énergie (20), le procédé comprenant :
la détermination (501), par un capteur à induction magnétique, d'une position d'une bobine émettrice dans un dispositif de transmission d'énergie (10) configuré pour charger sans fil le dispositif de réception d'énergie (20) ;
la détermination (502) d'un paramètre de réglage de position de la bobine émettrice en fonction d'une position d'une bobine réceptrice dans le dispositif de réception d'énergie (20) et de la position de la bobine émettrice, dans lequel le paramètre de réglage de position est utilisé pour indiquer une direction de réglage et une distance de réglage de la bobine émettrice ;
la transmission (503) du paramètre de réglage de position au dispositif de transmission d'énergie (10);
**caractérisé par** le réglage, par le dispositif de transmission d'énergie (10), d'une position de la bobine émettrice à l'aide d'un dispositif d'entraînement en fonction des informations d'indication de décalage de position, dans lequel le dispositif d'entraînement comprend des électroaimants dans le dispositif de transmission d'énergie (10) et des matériaux magnétiques sur des positions de la bobine émettrice correspondant aux électroaimants.

6. Procédé selon la revendication 5, dans lequel la détermination (501), par le capteur à induction magnétique, de la position de la bobine émettrice dans le dispositif de transmission d'énergie (10) configuré pour charger sans fil le dispositif de réception d'énergie (20) comprend :
l'acquisition d'un paramètre de champ magnétique d'un aimant disposé dans le dispositif de transmission d'énergie (10) par le capteur à induction magnétique, dans lequel une position centrale de l'aimant est alignée avec une position centrale de la bobine émettrice ;
la détermination de la position de la bobine émettrice en fonction du paramètre de champ magnétique de l'aimant ;
et dans lequel la détermination de la position de la bobine émettrice en fonction du paramètre de champ magnétique de l'aimant comprend :
la détermination d'une composante de champ magnétique dans une direction horizontale de l'aimant en fonction du paramètre de champ magnétique de l'aimant,
le paramètre de champ magnétique de l'aimant comprenant une direction de champ magnétique et une magnitude de champ magnétique ;
la détermination de la position de la bobine émettrice en fonction de la composante de champ magnétique et d'une première relation de mappage, dans lequel la première relation de mappage est utilisée pour décrire une relation de mappage entre la composante de champ magnétique et la position de la bobine émettrice.

7. Procédé selon la revendication 5, dans lequel la détermination (501), par le capteur à induction magnétique, de la position de la bobine émettrice dans le dispositif de transmission d'énergie (10) configuré pour charger sans fil le dispositif de réception d'énergie (20) comprend :
l'acquisition d'un paramètre de champ magnétique de la bobine émettrice par un capteur à induction magnétique ;
la détermination de la position de la bobine émettrice en fonction du paramètre de champ magnétique de la bobine émettrice ;
et dans lequel l'acquisition du paramètre de champ magnétique de la bobine émettrice par le capteur à induction magnétique comprend :
la collecte d'un paramètre de champ magnétique d'un premier champ magnétique de la bobine émettrice par le capteur à induction magnétique selon une première fréquence d'échantillonnage, le premier champ magnétique étant un champ magnétique généré par la bobine émettrice pour la charge sans fil ; et la détermination du paramètre de champ magnétique de la bobine émettrice en fonction du paramètre de champ magnétique du premier champ magnétique acquis par échantillonnage ;
ou
la collecte d'un paramètre de champ magnétique d'un deuxième champ magnétique de la bobine émettrice par le capteur à induction magnétique selon une deuxième fréquence d'échantillonnage, le deuxième champ magnétique étant un autre champ magnétique généré par la bobine émettrice en plus du champ magnétique pour la charge sans fil ; et la détermination du paramètre de champ magnétique de la bobine émettrice en fonction du paramètre de champ magnétique du deuxième champ magnétique acquis par échantillonnage.

8. Procédé selon la revendication 7, dans lequel la détermination de la position de la bobine émettrice en fonction du paramètre de champ magnétique de la bobine émettrice comprend :
la détermination d'une composante de champ magnétique dans une direction horizontale de la bobine émettrice en fonction du paramètre de champ magnétique de la bobine émettrice, le paramètre de champ magnétique de la bobine émettrice comprenant une direction de champ magnétique et une magnitude de champ magnétique;
la détermination de la position de la bobine émettrice en fonction de la composante de champ magnétique et d'une deuxième relation de mappage, dans lequel la deuxième relation de mappage est utilisée pour décrire une relation de mappage entre la composante de champ magnétique et la position de la bobine émettrice.

9. Dispositif de réglage d'une position de bobine, appliqué à un dispositif de transmission d'énergie (10), le dispositif comprenant :
un module d'acquisition d'informations (810), configuré pour acquérir des informations d'indication de décalage de position entre une bobine émettrice dans le dispositif de transmission d'énergie (10) et une bobine réceptrice dans un dispositif de réception d'énergie (20) ;
dans lequel le dispositif de transmission d'énergie (10) est configuré pour charger sans fil le dispositif de réception d'énergie (20), et les informations d'indication de décalage de position sont utilisées pour refléter un décalage de position entre la bobine émettrice et la bobine réceptrice ;
**caractérisé en ce qu'**il comprend :
un module de réglage de position (820), configuré pour régler une position de la bobine émettrice en fonction des informations d'indication de décalage de position à l'aide d'un dispositif d'entraînement, dans lequel le dispositif d'entraînement comprend des électroaimants dans le dispositif de transmission d'énergie (10) et des matériaux magnétiques sur des positions de la bobine émettrice correspondant aux électroaimants.

10. Dispositif selon la revendication 9, dans lequel les informations d'indication de décalage de position comprennent des informations d'indication d'efficacité de charge, et les informations d'indication d'efficacité de charge sont utilisées pour indiquer une efficacité de charge de la charge sans fil ;
le module de réglage de position (820) comprend :
une unité de détection de condition (821), configurée pour détecter si les informations d'indication d'efficacité de charge satisfont une première condition prédéterminée ;
une unité de réglage de position (822), configurée pour régler la position de la bobine émettrice si les informations d'indication d'efficacité de charge satisfont la première condition prédéterminée ;
une unité d'acquisition d'informations (823), configurée pour, après le réglage de la position de la bobine émettrice, réacquérir les informations d'indication d'efficacité de charge, détecter si les informations d'indication d'efficacité de charge satisfont la première condition prédéterminée par l'unité de détection de condition (821) jusqu'à ce que les informations d'indication d'efficacité de charge ne satisfassent plus la première condition prédéterminée, puis arrêter le réglage de la position de la bobine émettrice ;
dans lequel le module d'acquisition d'informations (810) est en outre configuré pour :
acquérir une puissance émise du dispositif de transmission d'énergie (10) et une puissance reçue du dispositif de réception d'énergie (20) ;
calculer une efficacité de charge en fonction de la puissance émise et de la puissance reçue;
déterminer les informations d'indication d'efficacité de charge en fonction de l'efficacité de charge.

11. Dispositif selon la revendication 10, dans lequel les informations d'indication de décalage de position comprennent en outre des informations d'indication de température de charge, et les informations d'indication de température de charge sont utilisées pour indiquer une température du dispositif de transmission d'énergie (10) ;
l'unité de détection de condition (821) est en outre configurée pour détecter si les informations d'indication de température de charge satisfont une deuxième condition prédéterminée;
l'unité de réglage de position (822) est en outre configurée pour régler la position de la bobine émettrice si les informations d'indication de température de charge satisfont la deuxième condition prédéterminée;
l'unité d'acquisition d'informations (823) est en outre configurée pour, après le réglage de la position de la bobine émettrice, réacquérir les informations d'indication de température de charge, détecter si les informations d'indication de température de charge satisfont la deuxième condition prédéterminée par l'unité de détection de condition jusqu'à ce que les informations d'indication d'efficacité de charge ne satisfassent plus la première condition prédéterminée et que les informations d'indication de température de charge ne satisfassent plus la deuxième condition prédéterminée, puis arrêter le réglage de la position de la bobine émettrice.

12. Dispositif selon la revendication 9, dans lequel le module d'acquisition d'informations (810) est en outre configuré pour:
recevoir un paramètre de réglage de position transmis depuis le dispositif de réception d'énergie (20), le paramètre de réglage de position étant utilisé pour indiquer une direction de réglage et une distance de réglage de la bobine émettrice.

13. Système de réglage d'une position de bobine, appliqué à un dispositif de transmission d'énergie (10) et un dispositif de réception d'énergie (20), le système comprenant:
un module de détermination de position (1010), configuré pour déterminer, par un capteur à induction magnétique, une position d'une bobine émettrice dans un dispositif de transmission d'énergie (10) configuré pour charger sans fil le dispositif de réception d'énergie (20) ;
un module de détermination de paramètre (1020), configuré pour déterminer un paramètre de réglage de position de la bobine émettrice en fonction d'une position d'une bobine réceptrice dans le dispositif de réception d'énergie (20) et de la position de la bobine émettrice, dans lequel le paramètre de réglage de position est utilisé pour indiquer une direction de réglage et une distance de réglage de la bobine émettrice;
un module de transmission de paramètre (1030), configuré pour transmettre le paramètre de réglage de position au dispositif de transmission d'énergie (10) ;
**caractérisé par** le réglage, par le dispositif de transmission d'énergie (10), d'une position de la bobine émettrice à l'aide d'un dispositif d'entraînement en fonction des informations d'indication de décalage de position, dans lequel le dispositif d'entraînement comprend des électroaimants dans le dispositif de transmission d'énergie (10) et des matériaux magnétiques sur des positions de la bobine émettrice correspondant aux électroaimants.

14. Système selon la revendication 13, dans lequel le module de détermination de position (1010) comprend :
une unité d'acquisition de paramètre (1011), configurée pour acquérir un paramètre de champ magnétique d'un aimant disposé dans le dispositif de transmission d'énergie (10) par le capteur à induction magnétique, dans lequel une position centrale de l'aimant est alignée avec une position centrale de la bobine émettrice ;
une unité de détermination de position (1012), configurée pour déterminer la position de la bobine émettrice en fonction du paramètre de champ magnétique de l'aimant; et dans lequel l'unité de détermination de position (1012) est configurée pour:
déterminer une composante de champ magnétique dans une direction horizontale de l'aimant en fonction du paramètre de champ magnétique de l'aimant, le paramètre de champ magnétique comprenant une direction de champ magnétique et une magnitude de champ magnétique;
déterminer la position de la bobine émettrice en fonction de la composante de champ magnétique et d'une première relation de mappage, dans lequel la première relation de mappage est utilisée pour décrire une relation de mappage entre la composante de champ magnétique et la position de la bobine émettrice.

15. Système selon la revendication 13, dans lequel le module de détermination de position (1010) comprend :
une unité d'acquisition de paramètre (1011), configurée pour acquérir un paramètre de champ magnétique de la bobine émettrice par un capteur à induction magnétique;
une unité de détermination de position (1012), configurée pour déterminer la position de la bobine émettrice en fonction du paramètre de champ magnétique de la bobine émettrice;
et dans lequel l'unité d'acquisition de paramètre (1011) est configurée pour:
collecter un paramètre de champ magnétique d'un premier champ magnétique de la bobine émettrice par le capteur à induction magnétique selon une première fréquence d'échantillonnage, le premier champ magnétique étant un champ magnétique généré par la bobine émettrice pour la charge sans fil ; et déterminer le paramètre de champ magnétique de la bobine émettrice en fonction du paramètre de champ magnétique du premier champ magnétique acquis par échantillonnage ;
ou
collecter un paramètre de champ magnétique d'un deuxième champ magnétique de la bobine émettrice par le capteur à induction magnétique selon une deuxième fréquence d'échantillonnage, le deuxième champ magnétique étant un autre champ magnétique généré par la bobine émettrice en plus du champ magnétique pour la charge sans fil ; et déterminer le paramètre de champ magnétique de la bobine émettrice en fonction du paramètre de champ magnétique du deuxième champ magnétique acquis par échantillonnage.

16. Système selon la revendication 15, dans lequel l'unité de détermination de position (1012) est en outre configurée pour:
déterminer une composante de champ magnétique dans une direction horizontale de la bobine émettrice en fonction du paramètre de champ magnétique de la bobine émettrice, le paramètre de champ magnétique de la bobine émettrice comprenant une direction de champ magnétique et une magnitude de champ magnétique ;
déterminer la position de la bobine émettrice en fonction de la composante de champ magnétique et d'une deuxième relation de mappage, dans lequel la deuxième relation de mappage est utilisée pour décrire une relation de mappage entre la composante de champ magnétique et la position de la bobine émettrice.
